# EUROPEAN PATENT SPECIFICATION

(11) **EP 4 343 668 B1**
(45) Date of publication and mention of the grant of the patent: **25.03.2026**
(21) Application number: 22804686.8
(22) Date of filing: 17.05.2022
(51) Int. Cl.: G06Q 50/04, G06Q 50/10, G06Q 30/0207

(54) **RESOURCE MANAGEMENT DEVICE, COLLECTION DEVICE, RESOURCE MANAGEMENT METHOD, RESOURCE MANAGEMENT PROGRAM, COLLECTION METHOD, AND COLLECTION PROGRAM**
RESSOURCENVERWALTUNGSVORRICHTUNG, SAMMELVORRICHTUNG, RESSOURCENVERWALTUNGSVERFAHREN, RESSOURCENVERWALTUNGSPROGRAMM, SAMMELVERFAHREN UND SAMMELPROGRAMM
DISPOSITIF, PROCÉDÉ ET PROGRAMME DE GESTION DE RESSOURCE, DISPOSITIF, PROCÉDÉ ET PROGRAMME DE COLLECTE

(30) Priority: 17.05.2021 JP 2021083392
(43) Date of publication of application: 27.03.2024
(73) Proprietor: Asahi Kasei Kabushiki Kaisha, Tokyo 1000006 (JP)
(72) Inventor: HORIE Naoki, Tokyo 100-0006 (JP)
(74) Representative: Hoffmann Eitle
(86) International application number: PCT/JP2022/020542
(87) International publication number: WO 2022/244775

(56) References cited:
- WO-A1-2017/007913
- JP-A- 2004 171 124
- JP-A- 2009 037 421
- JP-A- 2014 038 487
- JP-A- 2020 021 487
- US-A1- 2015 144 012
- US-A1- 2020 189 844
- US-A1- 2021 139 235

## Description

### BACKGROUND

### 1. TECHNICAL FIELD

The present invention relates to a resource management apparatus, a resource management method, and a resource management program.

### 2. RELATED ART

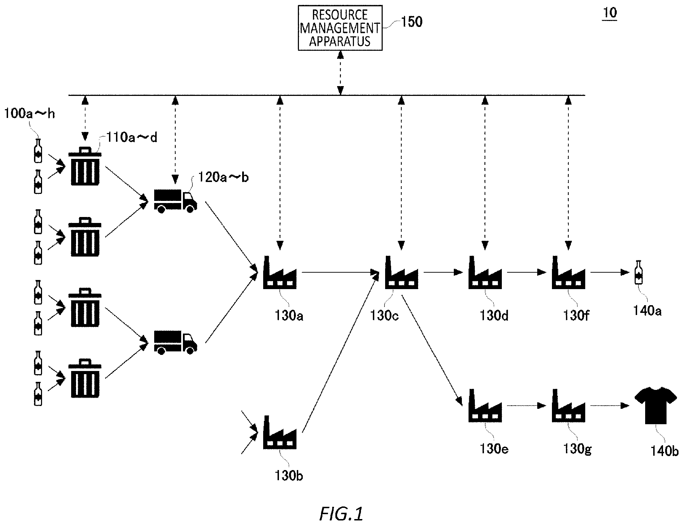

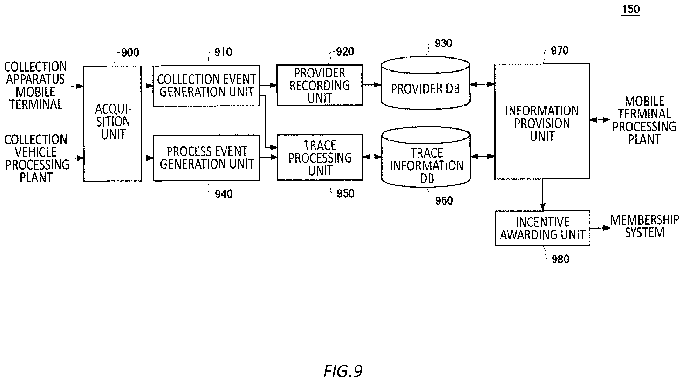

Patent Document 1 describes a "resource pickup apparatus including a read unit which reads information of a commodity which is attached to a resource discarded as a waste, a determination unit which determines a category as the resource of the commodity from the commodity information, an output unit which displays and outputs the category from the determination unit, and an overwrite unit which overwrites the commodity information" (claim 1). In addition, Patent Document 1 describes "as illustrated in Fig. 9, a resource pickup system 201 of a second embodiment is different from a resource pickup system 101 illustrated in Fig. 1 in that a public resource pickup apparatus 203 is mounted to a resource pickup box 102 at a public resource pickup site such as a resource repository in a local area, and a membership tag 211 held by a member is read by the resource pickup apparatus 203 to allow only the member with the membership tag 211 authenticated by the resource pickup apparatus 203 to discard a resource 104 into the public resource pickup apparatus 203" (paragraph 0049).

### LIST OF CITED REFERENCE

### Patent Document

Patent Document 1: Japanese Patent Application Publication No. 2006-124050
US 20210139235A1 discloses waste chute devices and methods of using thereof. The method for operating waste chutes comprises: receiving, using a hardware processor of a waste chute device, an identity associated with a user; in response to receiving the identity associated with the user, allowing, using the hardware processor, a door to be opened; determining a number of items and at least one type associated with the items that have been placed in an opening of the waste chute device; determining that the door has been closed; updating information associated with the user based on the number of items and the at least one type of items that have been placed in the opening of the waste chute device; and providing the user with the updated Information.
US 2020/189844 A1 discloses a trash collection device comprising a trash receptacle with a unique identification and an opening to receive a class of trash; an identification scanner for recognizing a user; a trash item counter; a fill level sensor; a display; a compactor; a solar panel configured to charge a battery; a data communicator configured to communicate date to a cloud storage; a processor configured to generate incentive for the user; wherein the trash collection device is configured to be modular and configurable to connect with another similar trash collection device to enable to collect additional trash class and is configured to interact with each other through a common software.
WO 2017/007913 Al discloses systems, methods and devices are provided for tracking and managing waste or recyclable materials, which may include one or more devices enabled to capture and record information about waste material at a point in a distribution chain, as well as information technology systems for collecting, processing, analyzing and otherwise managing information about a large number and variety of streams of waste material.
US 2015/0144012 A1 discloses an interactive waste receptacle combining a waste receptacle, a display device, a sensor, a camera, a speaker, and a variety of interactive media to receive and process waste, and perform an assortment of interactive functions in a public venue.

In the resource pickup apparatus according to Patent Document 1, it is possible to determine the category of the discarded resource and allow only the member to discard the resource into the public resource pickup apparatus, but it is not possible to trace how the picked-up resource is to be recycled.

### General Disclosure

The invention is accomplished by the subject-matter of the independent claims. The dependent claims concern particular embodiments.

According to a second aspect of the present invention, there is provided a collection apparatus including a collection bin which collects a resource that is to be recycled, a generation unit which generates, in response to disposal of the resource into the collection bin, collection information indicating that the resource has been collected, and an output unit which outputs the collection information so as to be available at a communication terminal of a provider of the resource.

In the collection apparatus, the output unit may display the collection information in a form of a code image readable by an image capturing apparatus included in the communication terminal.

In any of the collection apparatuses, the generation unit may generate the collection information including collection identification information for identifying each collection of the resource for the collection bin.

According to a third aspect of the present invention, there is provided a collection apparatus including a collection bin which collects a resource that is to be recycled, an acquisition unit which acquires, in response to disposal of the resource into the collection bin, provider identification information for identifying a provider of the resource from a communication terminal used by the provider, and a transmission unit which transmits the provider identification information to a resource management apparatus which traces a recycling process for the resource.

The collection apparatus may further include a generation unit which generates, in response to disposal of the resource into the collection bin, collection information indicating that the resource has been collected, in which the transmission unit may transmit the provider identification information and the collection information to the resource management apparatus.

Any of the collection apparatuses may further include a type detection unit which detects a type of the resource to be disposed into the collection bin, in which the generation unit may generate the collection information including type information indicating the type of the resource that is disposed.

Any of the collection apparatuses may further include a resource amount detection unit which detects an amount of the resource that is disposed into the collection bin, in which the generation unit may generate the collection information including resource amount information indicating the amount of the resource that is disposed.

According to a fourth aspect of the present invention, there is provided a resource management method including acquiring, by a resource management apparatus, in response to provision of a resource that is to be recycled, a collection event of the resource, acquiring, by the resource management apparatus, provider identification information for identifying a provider who has provided the resource, and recording, by the resource management apparatus, an association between collection event identification information for identifying the collection event of the resource and the provider identification information of the provider of the resource in a provider database.

According to a fifth aspect of the present invention, there is provided a resource management program that, when executed by a computer, causes the computer to function as an event acquisition unit which acquires, in response to provision of a resource that is to be recycled, a collection event of the resource, a provider information acquisition unit which acquires provider identification information for identifying a provider who has provided the resource, and a provider recording unit which records an association between collection event identification information for identifying the collection event of the resource and the provider identification information of the provider of the resource in a provider database.

According to a sixth aspect of the present invention, there is provided a collection method including generating, by a collection apparatus, in response to disposal of a resource that is to be recycled into a collection bin which collects the resource, collection information indicating that the resource has been collected, and outputting, by the collection apparatus, the collection information so as to be available at a communication terminal of a provider of the resource.

According to a seventh aspect of the present invention, there is provided a collection program that, when executed by a computer of a collection apparatus which collects a resource that is to be recycled, causes the computer to function as a generation unit which generates, in response to disposal of the resource into a collection bin which collects the resource, collection information indicating that the resource has been collected, and an output unit which outputs the collection information so as to be available at a communication terminal of a provider of the resource.

According to an eighth aspect of the present invention, there is provided a collection method including acquiring, by a collection apparatus, in response to disposal of a resource that is to be recycled into a collection bin which collects the resource, provider identification information for identifying a provider of the resource from a communication terminal used by the provider, and transmitting, by a collection apparatus, the provider identification information to a resource management apparatus which traces a recycling process for the resource.

According to a ninth aspect of the present invention, there is provided a collection program that, when executed by a computer of a collection apparatus which collects a resource that is to be recycled, causes the computer to function as an acquisition unit which acquires, in response to disposal of the resource into a collection bin, provider identification information for identifying a provider of the resource from a communication terminal used by the provider, and a transmission unit which transmits the provider identification information to a resource management apparatus which traces a recycling process for the resource.

Note that the summary clause does not necessarily describe all necessary features of the embodiments of the present invention. The present invention may also be a sub-combination of the features described above.

### BRIEF DESCRIPTION OF THE DRAWINGS

Fig. 1 illustrates a resource recycling environment 10 according to the present embodiment.
Fig. 2 illustrates a configuration of a collection apparatus 200 according to the present embodiment.
Fig. 3 illustrates an operation flow of the collection apparatus 200 according to the present embodiment.
Fig. 4 illustrates an example of an operation of collecting a resource in the collection apparatus 200 according to the present embodiment.
Fig. 5 illustrates an example of an operation of picking up the resource from the collection apparatus 200 to a collection vehicle 120 according to the present embodiment.
Fig. 6 illustrates a configuration of a collection apparatus 600 according to the present embodiment.
Fig. 7 illustrates an operation flow of the collection apparatus 600 according to the present embodiment.
Fig. 8 illustrates an example of an operation of picking up the resource from the collection vehicle 120 to a processing plant 130 according to the present embodiment.
Fig. 9 illustrates a configuration of a resource management apparatus 150 according to the present embodiment.
Fig. 10 illustrates an example of information to be stored in a provider DB 930 and a trace information DB 960 according to the present embodiment.
Fig. 11 illustrates an operation flow related to a resource collection in the resource management apparatus 150 according to the present embodiment.
Fig. 12 illustrates an operation flow related to a resource process in the resource management apparatus 150 according to the present embodiment.
Fig. 13 illustrates an operation flow of outputting information related to a process of the collected resource in the resource management apparatus 150 according to the present embodiment.
Fig. 14 illustrates an example of information related to the process of the collected resource which is output by the resource management apparatus 150 according to the present embodiment.
Fig. 15 illustrates an operation flow of outputting information related to a product in the resource management apparatus 150 according to the present embodiment.
Fig. 16 illustrates an example of information related to a product which is output by the resource management apparatus 150 according to the present embodiment.
Fig. 17 illustrates a configuration of a mobile terminal 1700 according to the present embodiment.
Fig. 18 illustrates an operation flow related to a resource collection in the mobile terminal 1700 according to the present embodiment.
Fig. 19 illustrates an operation flow related to a process notification about a collected resource in the mobile terminal 1700 according to the present embodiment.
Fig. 20 illustrates a first display example related to the process notification about the collected resource in the mobile terminal 1700 according to the present embodiment.
Fig. 21 illustrates a second display example related to the process notification about the collected resource in the mobile terminal 1700 according to the present embodiment.
Fig. 22 illustrates a configuration of a resource management apparatus 2300 according to a first modified example of the present embodiment.
Fig. 23 illustrates an example of information to be stored in a provider DB 930 and a trace information DB 960 according to the first modified example of the present embodiment.
Fig. 24 illustrates an example of process information according to the first modified example of the present embodiment.
Fig. 25 illustrates a configuration of an information processing system 2500 according to a second modified example of the present embodiment.
Fig. 26 illustrates a configuration of a blockchain network 2502 according to the second modified example of the present embodiment.
Fig. 27 illustrates an example data structure of transaction information according to the second modified example of the present embodiment.
Fig. 28 illustrates an example of a data structure of a blockchain according to the second modified example of the present embodiment.
Fig. 29 illustrates an example of a computer 2200 in which a plurality of aspects of the present invention may be embodied in whole or in part.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

Fig. 1 illustrates a resource recycling environment 10 according to the present embodiment. The resource recycling environment 10 provides a supply chain in which one or more resources 100a to 100h that are to be recycled (which are also referred to as a "resource 100" or "resources 100") are collected, and these resources are recycled to be finally commercialized as one or more products 140a and 140b (which are also referred to as a "product 140" or "products 140"). Then, the resource recycling environment 10 allows tracing on what kind of processes each of the one or more resources 100a to 100h has been through to be recycled.

The resource recycling environment 10 includes one or more collection apparatuses 110a to 110d (which are also referred to as a "collection apparatus 110" or "collection apparatuses 110"), one or more collection vehicles 120a and 120b (which are also referred to as a "collection vehicle 120" or "collection vehicles 120"), and one or more processing plants 130a to 130g (which are also referred to as a "processing plant 130" or "processing plants 130") in the supply chain in which the resources 100a to 100h are to be recycled. Note that the resources 100a to 100h may be temporarily gathered at a repository or the like that is not illustrated in the drawing.

The one or more collection apparatuses 110 are installed in various collection locations. The collection apparatuses 110 are installed in collection locations where recyclable wastes to be discarded by a plurality of households can be collected such as, for example, a store like a supermarket, a waste collection site for a housing complex, a public waste collection site, or the like. The one or more collection apparatuses 110 may be managed by two or more different operators. In addition, at least some of the collection apparatuses 110 may be individually installed for each household such as a personal residence.

The resource 100 to be picked up by the collection apparatus 110 may be, for example, at least one type of a plastic bottle, a plastic tray, a metal can such as an aluminum can or a steel can, bottles, papers, a used battery, or the like. A material of the plastic bottle or plastic tray may be, for example, at least one type of polyethylene terephthalate (PET), polyethylene, polyolefin, or the like. In the present embodiment, a case where the resource 100 is a plastic bottle will be described as an example.

The one or more collection vehicles 120 collect the resource 100 from each of the collection apparatuses 110 installed in each of the collection locations to deliver the resource 100 to at least one of the processing plant 130a or the processing plant 130b that is a primary processing plant serving as a first recipient of the resource 100 among one or more processing plants 130. The one or more collection vehicles 120 may be used for collection business of two or more different operators.

The one or more processing plants 130 apply processing (reprocessing) such as modification or working to the one or more resources 100 collected from each of the collection apparatuses 110 to manufacture one or more products 140a and 140b (which are also referred to as a "product 140" or "products 140") by recycling. The one or more processing plants 130 may be operated by two or more different operators. In a space between the processing plants 130a and 130b which receive the resources 100 and the processing plants 130f and 130g which ship the products 140, the one or more processing plants 130 may include the one or more processing plants 130c to 130e which perform application of an intermediate processing step. In the example of the present drawing, the processing plants 130a and 130b receive the resources 100 from the collection vehicles 120a to 120b to perform a process in a primary step thereon. The processing plant 130c receives the resources 100 which have been through the primary step from the processing plants 130a and 130b to perform a process in a secondary step thereon. The processing plants 130d and 130e receive the resources 100 which have been through the secondary step to perform a process in a tertiary step thereon. The processing plants 130f and 130g receive the resources 100 which have been through the tertiary step to perform a process in a quartic step (final step) thereon to ship the resultants as the products 140a and 140b. Note that a "process of the resource 100" is a concept including not only the process in the primary step of processing the resource 100 itself but also the process of performing further working or the like in which a processed product, an intermediate product, or the like which is obtained by processing the resource 100 is used as an ingredient (that is, the processes in the secondary step and subsequent steps).

When the resource 100 is a plastic bottle, the processing plants 130a and 130b perform a process of compressing and packing plastic bottles to be shaped into bales, for example. The processing plant 130c performs a process of grinding, washing, melting, and the like on the bales to be pelletized, for example. The processing plants 130d and 130e perform a process of adding pigment, additive, and the like to pellets as ingredient resin to manufacture resin compounds serving as a material of the products 140, for example. The processing plants 130f and 130g perform a process of manufacturing plastic recycled products such as the product 140a (for example, a plastic bottle) and the product 140b (for example, clothing) by using the resin compounds as an ingredient, for example.

A resource management apparatus 150 is communicably connected to the one or more collection apparatuses 110, the one or more collection vehicles 120, and the one or more processing plants 130. The resource management apparatus 150 traces a recycling process for the resources 100 spanning from the one or more resources 100 to the one or more products 140, and performs information provision related to the recycle of each of the resources 100.

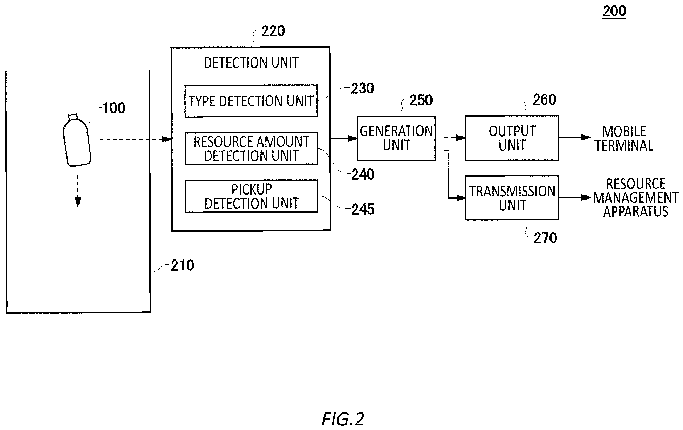

Fig. 2 illustrates a configuration of a collection apparatus 200 according to the present embodiment. The resource recycling environment 10 may include the collection apparatus 200 as at least one of the collection apparatuses 110. The collection apparatus 200 has a collection bin 210, a detection unit 220, a generation unit 250, an output unit 260, and a transmission unit 270.

The collection bin 210 is a container into which the resource 100 that is to be recycled is disposed, and which collects the disposed resource 100. The detection unit 220 detects that the resource 100 is disposed into the collection bin 210. The detection unit 220 may be provided in the vicinity of a disposal port of the collection bin 210, and may detect that the resource 100 is disposed into the collection bin 210 by using a mechanical sensor, an optical sensor, an image sensor, or the like.

In addition to a function of detecting the disposal of the resource 100, the detection unit 220 may have a function of detecting at least one of a type or an amount of the resource 100. In the example of the present drawing, the detection unit 220 includes a type detection unit 230 and a resource amount detection unit 240. The type detection unit 230 detects a type of the resource 100 disposed into the collection bin 210. A type of resin may be sensed by infrared absorption spectroscopy or the like, but as an example, the type detection unit 230 detects a type of the resource 100 based on an image obtained by capturing the resource 100 disposed into the collection bin 210. For example, the type detection unit 230 may detect whether the resource 100 is a plastic bottle, a color (colorless transparent, colored, or the like) of the resource 100, a shape of the resource 100, whether the resource 100 is applicable to a resource set as a pickup target (whether the resource is not a foreign object), or the like. In addition, the type detection unit 230 may read information recorded on an RFID or the like attached to the resource 100 to detect the type of the resource 100, detect whether the resource is applicable to the resource of the pickup target, and the like. In addition, the type detection unit 230 may detect the type of the resource 100 by collating a feature amount such as an external appearance of the resource 100 like a plastic bottle or the like or a pattern, moire, printing, or engraving added to the resource 100 with a feature amount of a known plastic bottle product.

The resource amount detection unit 240 detects an amount of the resource 100 disposed into the collection bin 210. As an example, the resource amount detection unit 240 detects a parameter related to a resource amount such as a number or size of plastic bottles or the like based on an image obtained by capturing the resource 100 disposed into the collection bin 210. In addition, by measuring a weight of the collection bin 210 or content of the collection bin 210, the resource amount detection unit 240 may detect an increase amount of a weight resulting from the disposal of the resource 100 as the amount of the resource 100 disposed into the collection bin 210.

In addition, the collection apparatus 200 may have a pickup detection unit 245. The pickup detection unit 245 detects whether the resource 100 in the collection bin 210 is picked up. As an example, the pickup detection unit 245 detects vibration or movement of the collection apparatus 200 or the collection bin 210 by an acceleration sensor or the like, and determines that an operation of transferring the resource 100 in the collection bin 210 to the collection vehicle 120 has been performed in response to the detection of the vibration or movement exceeding a predetermined reference amount.

When the collection apparatus 200 has a door for taking out the collection bin 210, the pickup detection unit 245 may determine that the resource 100 is picked up to the collection vehicle 120 in response to a state where this door is opened and closed. In addition, when the detection unit 220 has an image sensor, the pickup detection unit 245 may determine that the resource 100 is picked up to the collection vehicle 120 in response to a state where the resource 100 contained in the collection bin 210 has disappeared or diminished. In addition, when the detection unit 220 can measure the weight of the collection bin 210 or the content of the collection bin 210, the pickup detection unit 245 may determine that the resource 100 is picked up to the collection vehicle 120 in response to a state where the weight of the collection bin 210 or the content of the collection bin 210 has decreased or returned to an initial value.

The generation unit 250 is connected to the detection unit 220. The generation unit 250 generates collection information indicating that the resource 100 has been collected in response to disposal of the resource 100 into the collection bin 210. When the detection unit 220 includes the type detection unit 230, the generation unit 250 generates the collection information including type information indicating a type of the disposed resource 100. In addition, when the detection unit 220 includes the resource amount detection unit 240, the generation unit 250 generates the collection information including resource amount information indicating an amount of the disposed resource 100. In addition, the generation unit 250 generates process information indicating that the resource 100 is picked up in response to a state where the pickup detection unit 245 has detected pickup of the resource 100.

The output unit 260 is connected to the generation unit 250. The output unit 260 outputs at least part of the collection information generated by the generation unit 250 so as to be available at a communication terminal of the provider of the resource 100 from which this collection information is generated. As an example, the output unit 260 may output the collection information to the communication terminal of the provider by displaying the collection information on a screen of a display panel or the like. In addition, the output unit 260 may output the collection information to the terminal of provider by near field communication such as NFC communication.

The transmission unit 270 is connected to the generation unit 250. The transmission unit 270 may transmit at least part of the collection information generated by the generation unit 250 to the resource management apparatus 150. Note that when the output unit 260 is to output all the collection information to the resource management apparatus 150 via the communication terminal of the provider of the resource 100, the transmission unit 270 does not necessarily need to have a function of transmitting the collection information to the resource management apparatus 150. In addition, the transmission unit 270 transmits the process information generated by the generation unit 250 to the resource management apparatus 150.

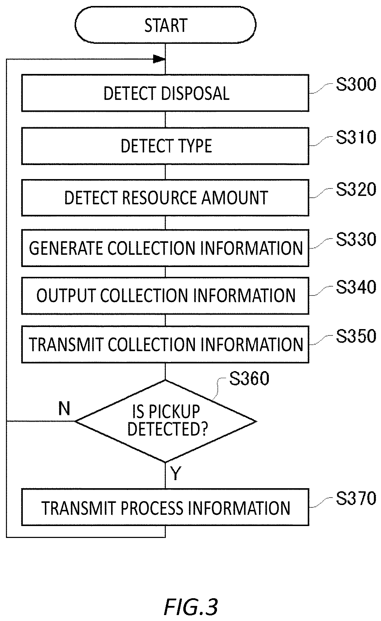

Fig. 3 illustrates an operation flow of the collection apparatus 200 according to the present embodiment. In step 300 (S300), the detection unit 220 detects that the resource 100 is disposed into the collection bin 210. In S310, the type detection unit 230 may detect a type of the resource 100 disposed into the collection bin 210. In S320, the resource amount detection unit 240 may detect an amount of the resource 100 disposed into the collection bin 210.

In S330, the generation unit 250 generates the collection information indicating that the resource 100 is collected. The generation unit 250 may include, in part of the collection information, at least one of the type information indicating the type of the resource 100 or the resource amount information indicating the amount of the resource 100. In addition, in order to set collection of each of the resources 100 to be identifiable, the generation unit 250 may include, in the collection information, at least one of collection identification information for identifying each collection of the resource 100 for the collection bin 210, information indicating a collection date and time, or information indicating a collection location. Herein, a phrase "the collection information includes the type information or the like" means, for example, that data defined as "the collection information" has a plurality of fields, and the type information is encoded by being recorded in one of those fields or the like in such a state that the type information can be read from the collection information.

In S340, the output unit 260 outputs the collection information so as to be available at the communication terminal of the provider who has disposed the resource 100, which then has been collected, into the collection bin 210. As an example, the output unit 260 may display the collection information in a form of a code image readable by an image capturing apparatus included in the communication terminal. In S350, the transmission unit 270 may transmit the collection information to the resource management apparatus 150.

In S360, the pickup detection unit 245 detects whether the resource 100 in the collection bin 210 is picked up by the collection vehicle 120. When the resource 100 is not picked up, the collection apparatus 200 advances the process to S300, and waits for disposal of the next resource 100. When it is detected that the resource 100 is picked up, the generation unit 250 generates process information with regard to a pickup process of the resource 100, and the transmission unit 270 transmits the process information to the resource management apparatus 150.

Note that in another embodiment, part or all of respective functions of the detection unit 220, the generation unit 250, the output unit 260, and the transmission unit 270 in the collection apparatus 200 of Fig. 2 may be implemented by a mobile terminal of the provider of the resource 100. When all of these functions are implemented by the mobile terminal of the provider, the collection apparatus 200 may be constituted by only the collection bin 210 which does not have a function of detecting the resource 100 and a communication function.

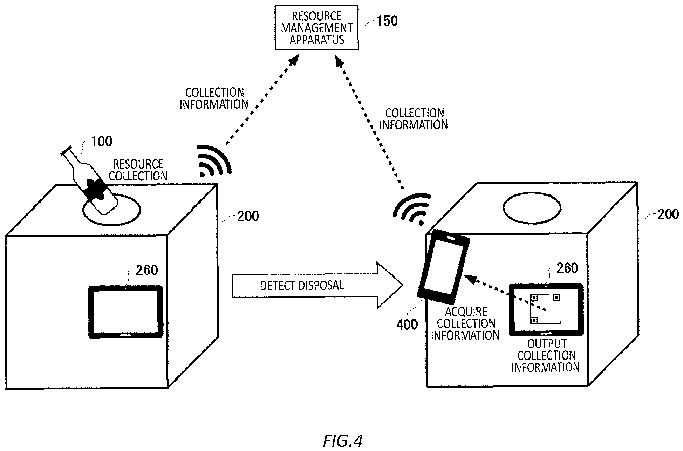

Fig. 4 illustrates an example of an operation of collecting a resource in the collection apparatus 200 according to the present embodiment. In the example of the present drawing, the collection apparatus 200 has a display screen serving as an output destination of information by the output unit 260. When it is detected that the resource 100 is disposed into the collection apparatus 200, the collection apparatus 200 displays the collection information by the output unit 260. At this time, the output unit 260 may display collection apparatus identification information for identify the collection apparatus 200 in addition to the collection information. The output unit 260 may display information including the collection information and the collection apparatus identification information by a barcode, a two-dimensional barcode, or a QR code (registered trademark) or in other image forms.

The provider of the resource 100 reads the collection information and the collection apparatus identification information which are displayed on the output unit 260 by a mobile terminal 400 of the provider. The mobile terminal 400 transmits the collection information and the collection apparatus identification information which have been read to the resource management apparatus 150 in association with provider identification information, which is stored in the mobile terminal 400, for identifying a user of the mobile terminal 400 (that is, the provider of the resource 100). Herein, the provider identification information may be a member ID or the like for identifying a member registered in an application, a cloud service, or the like which is to visualize recycling of the resource 100, or may also be a terminal ID or the like assigned to the communication terminal used by the provider.

Thus, the resource management apparatus 150 can acquire the association between the collection information and the provider identification information for identifying the provider who has disposed the resource 100 with regard to each collection of the resource 100. In the above described configuration, the collection apparatus 200 and the mobile terminal 400 may transmit different parts of the collection information to the resource management apparatus 150. For example, the collection apparatus 200 may transmit the collection apparatus identification information and the collection identification information out of the collection information to the resource management apparatus 150, and the mobile terminal 400 may transmit the provider identification information, the collection apparatus identification information, and the collection information including more detailed data such as the collection identification information, the collection date and time, the collection location, the type information, and the resource amount information to the resource management apparatus 150. In this case, the collection apparatus 200 does not necessarily need to have a function of transmitting the collection apparatus identification information and the collection identification information out of the collection information to the resource management apparatus 150.

In addition, for example, the collection apparatus 200 may transmit the collection apparatus identification information and the collection information including more detailed data such as the collection identification information, the collection date and time, the collection location, the type information, and the resource amount information to the resource management apparatus 150, and the mobile terminal 400 may transmit the provider identification information, the collection apparatus identification information, and the collection identification information out of the collection information to the resource management apparatus 150.

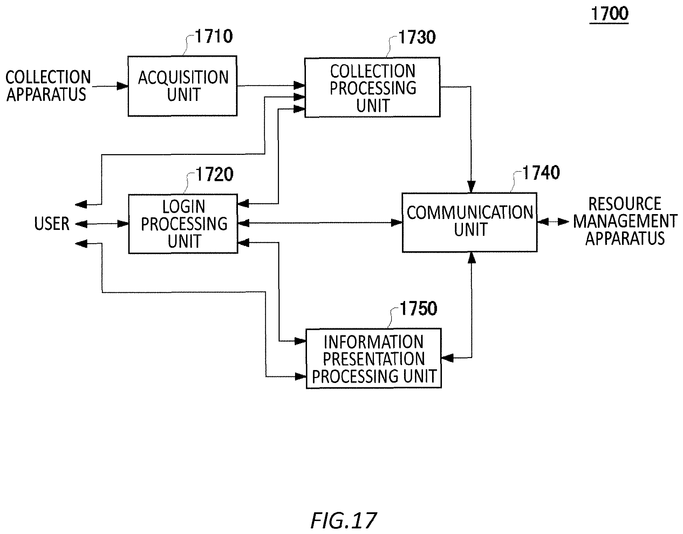

The mobile terminal 400 may execute the application which visualizes the recycling of the resource 100, and perform a process of transmitting the collection information, the provider identification information, and the like to the resource management apparatus 150 for the member who has been registered in advance. In this case, when the collection information and the collection apparatus identification information are read by the mobile terminal 400 of the provider other than the member, the output unit 260 may display a code image with an encoded link for causing the mobile terminal 400 to display a webpage which prompts a membership registration. Note that the configuration and operation of the mobile terminal 400 illustrated above will be described below with reference to Figs. 17 to 19.

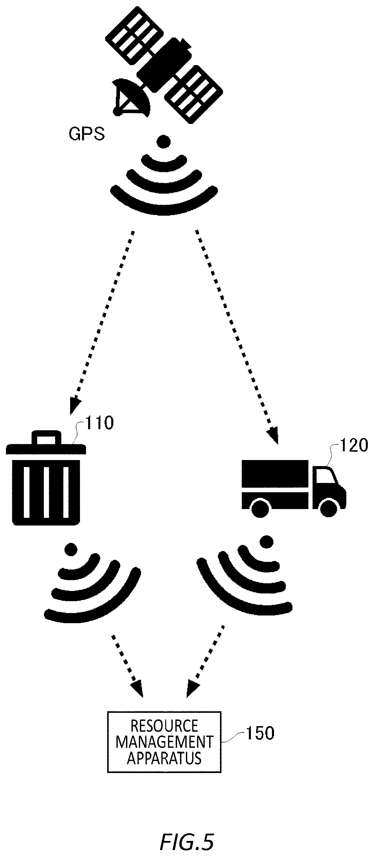

Fig. 5 illustrates an example of an operation of picking up the resource from the collection apparatus 200 to the collection vehicle 120 according to the present embodiment. In the example of the present drawing, each of the collection apparatus 110 and the collection vehicle 120 acquires its own location information by using a GPS or the like. When it is detected that the resource 100 is picked up, the collection apparatus 110 transmits the process information including the location information of the collection apparatus 110 at a pickup date and time to the resource management apparatus 150. The collection vehicle 120 transmits the location information to the resource management apparatus 150, for example, at a predetermined time interval (at a time interval of 1 minute or the like).

In response to reception of the process information from the collection apparatus 110, the resource management apparatus 150 determines that the resource 100 in the collection apparatus 110 is picked up by the collection vehicle 120 located near the collection apparatus 110 at the pickup date and time included in the process information. The resource management apparatus 150 may determine that the resource 100 is picked up by the collection vehicle 120 located closest to the collection apparatus 110 at the pickup date and time.

At this time, when the collection apparatus 110 is installed in a specific collection location and is not to be moved, the collection apparatus 110 does not necessarily need to transmit the location information to the resource management apparatus 150 each time the pickup occurs. In this case, the resource management apparatus 150 may determine that the resource 100 is picked up by the collection vehicle 120 located in the vicinity of the installment location of the collection apparatus 110 at the pickup date and time included in the process information. In addition, when the collection apparatus 110 can output the process information to the collection vehicle 120 by using a code or near field communication, the collection apparatus 110 may transmit the process information to the collection vehicle 120 instead of the transmission to the resource management apparatus 150, and may transmit the process information to the resource management apparatus 150 via the collection vehicle 120.

Thus, each time the resource 100 is picked up from the collection apparatus 110 to the collection vehicle 120, the resource management apparatus 150 can specify the collection vehicle 120 which has picked up each resource 100. Note that the collection vehicle 120 may achieve the above described function by communication equipment installed in the collection vehicle 120. Instead of this, for example, communication equipment which moves together with the collection vehicle 120 such as a communication terminal carried by a driver or the like of the collection vehicle 120 may achieve the above described function.

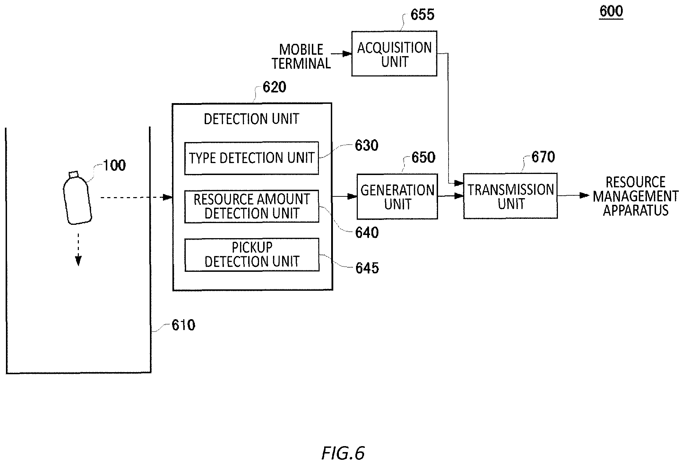

Fig. 6 illustrates a configuration of a collection apparatus 600 according to the present embodiment. The resource recycling environment 10 may include the collection apparatus 600 as at least one of the collection apparatuses 110. The collection apparatus 600 has a collection bin 610, a detection unit 620, a generation unit 650, an acquisition unit 655, and a transmission unit 670. The collection bin 610, the detection unit 620, the generation unit 650, and the transmission unit 670 have configurations and functions similar to those of each of the collection bin 210, the detection unit 220, the generation unit 250, and the transmission unit 270 illustrated in Fig. 2, and descriptions thereof will be omitted except for the following differences.

The collection bin 610 is a container into which the resource 100 that is to be recycled is disposed, and which collects the disposed resource 100. The detection unit 620 detects that the resource 100 is disposed into the collection bin 610. In addition to a function of detecting the disposal of the resource 100, the detection unit 620 may have a function of detecting a type or an amount of the resource 100. In the example of the present drawing, the detection unit 620 includes a type detection unit 630 and a resource amount detection unit 640. The type detection unit 630 detects a type of the resource 100 disposed into the collection bin 610. The resource amount detection unit 640 detects an amount of the resource 100 disposed into the collection bin 610. In addition, the collection bin 610 may have a pickup detection unit 645. The pickup detection unit 645 detects whether the resource 100 in the collection bin 610 is picked up.

In response to the disposal of the resource 100 into the collection bin 610, the acquisition unit 655 acquires the provider identification information for identifying the provider who has provided the resource 100 to the collection location from the communication terminal used by the provider of the resource 100. The acquisition unit 655 may acquire the provider identification information by reading a code of the provider identification information which is displayed on the communication terminal of the provider, or may acquire the provider identification information from the communication terminal of the provider by near field communication.

The transmission unit 670 transmits the provider identification information acquired from the mobile terminal of the provider to the resource management apparatus 150. The transmission unit 670 may transmit the provider identification information and the collection information which is generated by the generation unit 650 to the resource management apparatus 150.

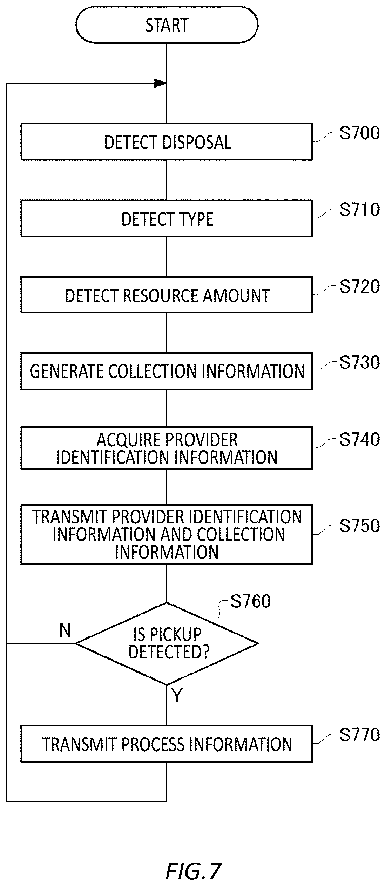

Fig. 7 illustrates an operation flow of the collection apparatus 600 according to the present embodiment. The operation flow in the present drawing includes an operation similar to the operation flow illustrated in Fig. 3, and descriptions thereof will be omitted except for the following differences.

In S700, the detection unit 620 detects that the resource 100 is disposed into the collection bin 610. In S710, the type detection unit 630 may detect a type of the resource 100 disposed into the collection bin 610. In S720, the resource amount detection unit 640 may detect an amount of the resource 100 disposed into the collection bin 610. In S730, the generation unit 650 generates the collection information indicating that the resource 100 is collected. S700 to S730 may be similar to S300 to S330 in Fig. 3.

In S740, in response to the disposal of the resource 100 into the collection bin 610, the acquisition unit 655 acquires the provider identification information for identify the provider from the communication terminal used by the provider of the resource 100. As an example, the communication terminal performs display, transmission, or the like of the provider identification information in response to an instruction of the provider by operating the application which visualizes the recycling of the resource 100. The acquisition unit 655 may acquire the provider identification information by reading the code of the provider identification information which is displayed on the communication terminal or by receiving the provider identification information transmitted from the communication terminal by near field communication or the like from the communication terminal.

In S750, the transmission unit 670 transmits the provider identification information and the collection information to the resource management apparatus 150. In S760, the pickup detection unit 645 detects whether the resource 100 in the collection bin 610 is picked up by the collection vehicle 120. When the resource 100 is not picked up, the collection apparatus 600 advances the process to S700, and waits for disposal of the next resource 100. When it is detected that the resource 100 is picked up, the generation unit 650 generates the process information, and the transmission unit 670 transmits the process information to the resource management apparatus 150. S760 to S770 may be similar to S360 to S370 in Fig. 3.

Note that in another embodiment, part or all of respective functions of the detection unit 620, the generation unit 650, the acquisition unit 655, and the transmission unit 670 in the collection apparatus 600 of Fig. 6 may be implemented by the mobile terminal of the provider of the resource 100. When all of these functions are implemented by the mobile terminal of the provider, the collection apparatus 600 may be constituted by only the collection bin 610 which does not have a function of detecting the resource 100 and a communication function.

In accordance with the collection apparatus 600 illustrated above, it is possible to acquire the provider identification information from the communication terminal of the provider of the resource 100 in response to the disposal of the resource 100 into the collection bin 610, and to transmit the provider identification information to the resource management apparatus 150 in association with the collection information. Thus, the resource management apparatus 150 can acquire the association between the collection information and the provider identification information for identify the provider who has disposed the resource 100 with regard to each collection of the resource 100.

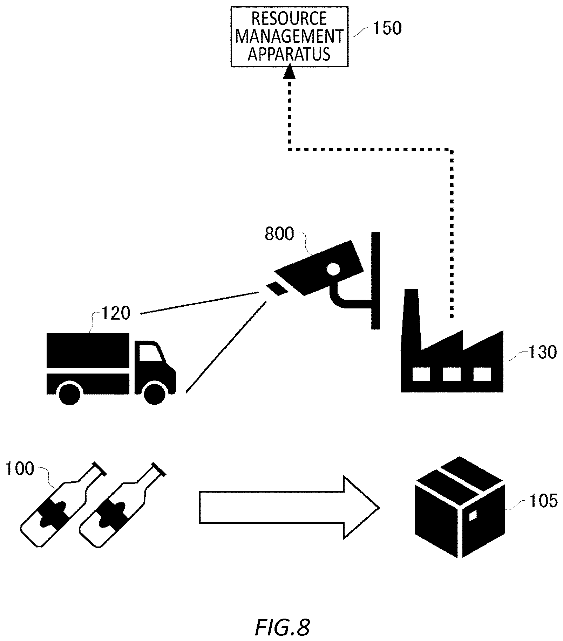

Fig. 8 illustrates an example of an operation of picking up the resource 100 from the collection vehicle 120 to the processing plant 130 according to the present embodiment. In the example of the present drawing, the processing plant 130 includes a photographing apparatus 800 which is arranged at and associated with an entrance of the processing plant 130, a road through which the collection vehicle 120 passes within a premise of the processing plant 130, a location where it is possible to capture a parking position for the collection vehicle 120 to park when the resource 100 is picked up from the collection vehicle 120 to the processing plant 130, or the like. The photographing apparatus 800 reads a number plate of the collection vehicle 120 in response to pickup of the resource 100 from the collection vehicle 120 to the processing plant 130. Thus, the processing plant 130 can acquire information for specifying the association between each of the resources 100 which have been picked up and the collection vehicle 120.

The processing plant 130 processes each of the picked-up resources 100 to manufacture a resource 105 made into a recycled material. The processing plant 130 transmits information related to an association between the collection vehicle 120 which has delivered each of the resources 100 and the resource 105 to the resource management apparatus 150 by being included in the process information related to a process in the processing plant 130. By using such process information, it becomes possible for the resource management apparatus 150 to associate the collection event and with regard to each of the resources 100 with the process event of each of the resources 100. Note that the processing plant 130 or the resource management apparatus 150 may also determine that the collection vehicle 120 has delivered the resource 100 to the processing plant 130 based on the location information of the collection vehicle 120 similarly as in Fig. 5.

Note that the processing plant 130 may achieve functions of performing control on the photographing apparatus 800, communication with the resource management apparatus 150, and the like by communication equipment installed in the plant. Instead of this, for example, communication equipment associated with the processing plant 130 such as a communication terminal carried by an employee of the processing plant 130 may achieve the above described functions.

Fig. 9 illustrates a configuration of the resource management apparatus 150 according to the present embodiment. The resource management apparatus 150 may be a computer such as a personal computer (PC), a work station, a server computer, or a general purpose computer, or may also be a computer system in which a plurality of computers is connected. Such a computer system is also a computer in a broad sense. In addition, the resource management apparatus 150 may be implemented in one or more virtual computer environments which can be executed in the computer. Instead of this, the resource management apparatus 150 may be a dedicated computer designed for management on resource recycle or may also be dedicated hardware achieved by dedicated circuitry. When the resource management apparatus 150 is achieved by the computer, the resource management apparatus 150 may function as each component illustrated in the present drawing by executing a resource management program.

The resource management apparatus 150 has an acquisition unit 900, a collection event generation unit 910, a provider recording unit 920, a provider database (DB) 930, a process event generation unit 940, a trace processing unit 950, a trace information DB 960, and an information provision unit 970. In response to provision of the resource 100 that is to be recycled to the collection location, the acquisition unit 900 acquires the collection information, the collection apparatus identification information, and the provider identification information from at least one of the collection apparatus 110 or the communication terminal of the provider. In addition, in response to a state where a process of the resource 100 is to be performed in the processing plant 130, the acquisition unit 900 acquires the process information from at least one of the collection vehicle 120 or the processing plant 130.

The collection event generation unit 910 is connected to the acquisition unit 900. The collection event generation unit 910 generates a collection event of the resource 100 in response to the provision of the resource 100 that is to be recycled to the collection location. In the present embodiment, the collection event generation unit 910 generates the collection event based on the collection information and the collection apparatus identification information which are acquired by the acquisition unit 900.

Note that when a physical phenomenon in which the resource 100 that is to be recycled is provided to the collection location is regarded as "the collection event" as a substance, the collection event generation unit 910 is configured to generate "the collection event" as information to be used for the process in the resource management apparatus 150. Accordingly, the collection event generation unit 910 can be regarded as a type of a collection event acquisition unit which acquires the collection event as a substance, and can also be regarded as a collection event detection unit which detects information of the collection event as a substance from the information acquired by the acquisition unit 900 in response to generation of the collection event as a substance, and outputs the collection event as information.

The provider recording unit 920 is connected to the collection event generation unit 910. The provider recording unit 920 records an association between collection event identification information for identifying the collection event of the resource 100 and the provider identification information of the provider of the resource 100 in the provider DB 930. The provider DB 930 is connected to the provider recording unit 920, and stores an association between the collection event identification information of the collection event of each of the resources 100 and the provider identification information of the provider of each of the resources 100.

At this time, the association, which is recorded in the provider DB 930, between the provider identification information with regard to one of the providers and the collection event identification information may be disclosed to other providers. Thus, the resource management apparatus 150 protects privacy for each of the providers by such a setting that other providers are not allowed to view what kind of resources 100 each of the providers has provided. Note that when an instruction of a provider is received, the association between the provider identification information and the collection event identification information with regard to the provider may be disclosed by the resource management apparatus 150. In addition, when an instruction or the like of a provider is received, the resource management apparatus 150 may set or restrict a range for disclosing the association between the provider identification information and the collection event identification information with regard to the provider (such as within a family, within a range of friends, or within a range of other specific group). To configure the disclosure range to be settable, the resource management apparatus 150 may store information of a group which is set by an instruction of the provider or information of a preset group (such as a set of identification information of one or two or more providers or the like included in the group) in the provider DB 930 or the like in association with the provider identification information and manage the information.

Note that timing at which the collection event generation unit 910 generates the collection event may be timing at which the resource 100 is collected from the collection location. In this case, the provider recording unit 920 and the trace processing unit 950 do not necessarily need to record information such as the date and time when each of the providers has provided the resource 100 in the provider DB 930 and the trace information DB 960 as the collection event identification information or the like. In a case where the information such as the date and time when the resource 100 has been provided is not recorded, the resource management apparatus 150 does not record the information indicating that the provider is at the specific collection location at the specific date and time, so that the protection of the privacy for each of the providers can be further enhanced.

The process event generation unit 940 is connected to the acquisition unit 900. In response to a process to be performed on the resource 100, the process event generation unit 940 generates a process event of the resource 100 based on the process information acquired by the acquisition unit 900. In the present embodiment, the process event generation unit 940 generates the process event based on the process information acquired by the acquisition unit 900.

Note that when a physical phenomenon in which the resource 100 has been through the process is regarded as "the process event" as a substance, the process event generation unit 940 is configured to generate "the process event" as information to be used for the process in the resource management apparatus 150. Accordingly, the process event generation unit 940 can be regarded as a type of a process event acquisition unit which acquires the process event as a substance, and can also be regarded as a process event detection unit which detects information of the process event as a substance from the information acquired by the acquisition unit 900 in response to generation of the process event as a substance, and outputs the process event as information. The collection event generation unit 910 and the process event generation unit 940 may collectively function as an "event generation unit", an "event acquisition unit", or the like.

Note that timing at which the process event generation unit 940 generates the process event may be timing at which the resource 100 is disposed into an apparatus which processes the resource 100 in the processing plant 130 or the like, timing at which a processed product of the resource 100 is acquired from the apparatus, or the like. Specifically, such timing may be timing at which the resource 100 that is to be disposed into the apparatus or the resource 100 processed by the apparatus is weighed by a weighing device, timing at which video of the resource 100 in a facility line of the processing plant is captured, timing at which a code or the like added to the resource 100 is read, or the like. Since the process event generation unit 940 generates the process event at the above described timing, the resource management apparatus 150 can link the generation of the process event to the event as a substance (process of the resource 100 in reality), and can avoid an artificial alteration of the process event itself and data related to the process event.

In addition, the timing at which the process event generation unit 940 generates the process event may be timing at which the resource 100 is fed from the upstream processing plant 130, timing at which the resource 100 is shipped to the downstream processing plant 130, or the like. Since the process event generation unit 940 generates the process event at the above described timing, the resource management apparatus 150 can link information related to the process of the resource 100 to information related to a transaction of the resource 100 (for example, information related to a transaction between the upstream processing plant 130 and the downstream processing plant 130 to be recorded in the trace information DB 960, and can avoid the artificial alteration of the data.

The trace processing unit 950 is connected to the collection event generation unit 910 and the process event generation unit 940. The trace processing unit 950 traces the recycling process for the resource 100 by using the collection event and the process event of the resource 100. The trace processing unit 950 records collection event information related to the collection event generated by the collection event generation unit 910 and process event information related to the process event generated by the process event generation unit 940 in the trace information DB 960. In addition, the trace processing unit 950 records an association between a process event and the collection event of one or more resources 100 set as process targets in the process event in the trace information DB 960 with regard to each of the process events. Note that with regard to each of the process events related to processes in the secondary step and subsequent steps, the trace processing unit 950 records an association between each of the process events and the process event related to the immediately preceding process on one or more resources 100 set as the process targets in the process event the trace information DB 960.

The trace information DB 960 is connected to the trace processing unit 950, and stores the collection event information of each of the collection events and the process event information of each of the process events together with the association between the mutual events. At this time, the trace information DB 960 may be disclosed to a plurality of providers, each of the processing plants 130, and the like. Thus, the resource management apparatus 150 can set a course of the resource 100 to be reclaimed into the product 140 to be widely disclosed while protecting the privacy of the provider of the resource 100 such that interests in recycling can be raised for a consumer of the resource 100 and also information of the supply chain can be presented to a manufacturer of the product 140 to increase a recycling rate of the product 140.

The information provision unit 970 is connected to the provider DB 930 and the trace information DB 960. The information provision unit 970 receives accesses from each of the mobile terminals, each of the processing plants 130, and the like and provides information related to the recycling of the resource 100 to each of the mobile terminals, each of the processing plants 130, and the like.

In addition, the resource management apparatus 150 may include an incentive awarding unit 980. The incentive awarding unit 980 is connected to the information provision unit 970. The incentive awarding unit 980 awards an incentive to the provider of the resource 100 in response to the resource 100 having been recycled.

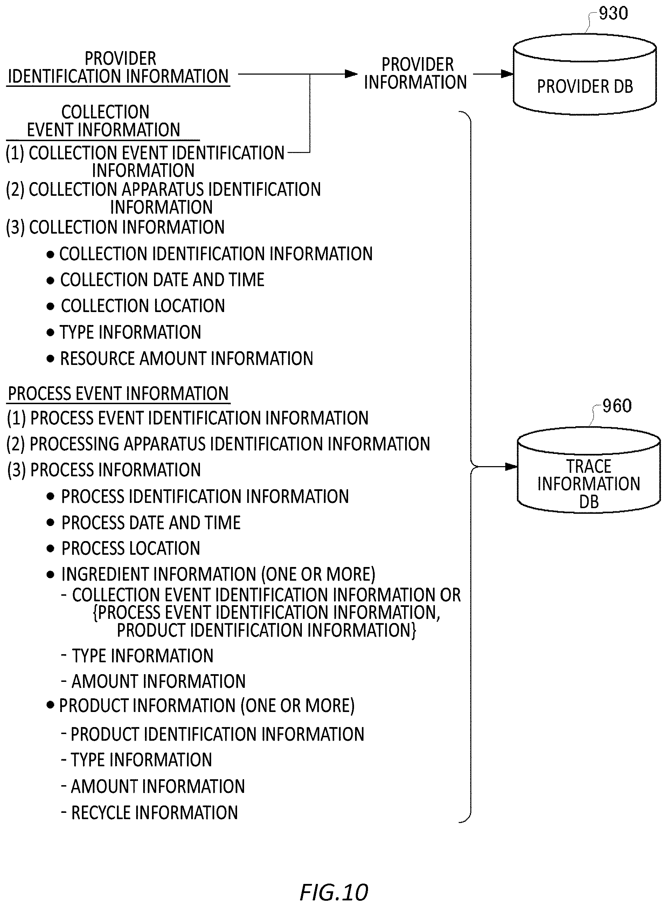

Fig. 10 illustrates an example information stored in the provider DB 930 and the trace information DB 960 according to the present embodiment. The provider DB 930 stores provider information in which the provider identification information and the collection event identification information are associated with each other. The trace information DB 960 stores the collection event information of each of the collection events and the process event information of each of the process events.

In the example of the present drawing, the collection event information includes the collection event identification information, the collection apparatus identification information, and the collection information. The collection event identification information is information for identifying the collection event in the resource recycling environment 10. The collection event generation unit 910 assigns unique collection event identification information to the collection event such that each of the collection events is identifiable in the resource recycling environment 10. As an example, the collection event generation unit 910 according to the present embodiment generates the unique collection event identification information in the resource recycling environment 10 by way of a combination or the like of the collection apparatus identification information uniquely assigned to each of the collection vehicles 120 and the collection identification information uniquely assigned in each of the collection vehicles 120. Instead of this, the collection event generation unit 910 may generate the collection event identification information incrementally, for example, or may also generate the collection event identification information according to a reception date and time of the collection information.

The collection apparatus identification information is information for identifying the collection apparatus 110 used in the resource recycling environment 10. The collection apparatus identification information may be a unique value for each of the collection apparatuses 110 such as a manufacturing number or a serial number of the collection apparatus 110. Instead of this, the collection apparatus identification information may be a value determined according to a location (a longitude and a latitude, or the like) of the collection location, for example.

The collection information is information related to the resource 100 having been through a collection and details of the collection. The collection information is generated by the generation unit 250 of Fig. 2, the generation unit 650 of Fig. 6, or the like. The collection information may include at least one of the collection identification information, the collection date and time, the collection location, the type information, or the resource amount information or all of those.

The collection identification information is information for identifying the collection of the resource 100 set as the target of the collection event in the collection apparatus 110. The collection date and time and the collection location are information indicating the date and time and the location in which the target resource 100 is collected. The collection apparatus 110 may specify the location of the collection apparatus 110 by receiving GPS signals or the like to be set as the information of the collection location, or may output preset location as the information of the collection location. The type information and the resource amount information are information indicating the type and the amount of the collected resource 100.

In the example of the present drawing, the process event information includes process event identification information, processing apparatus identification information, and the process information. The process event identification information is information for identifying the process event in the resource recycling environment 10. The process event generation unit 940 assigns unique process event identification information to the process event such that each of the process events is identifiable in the resource recycling environment 10. As an example, the process event generation unit 940 according to the present embodiment generates the unique process event identification information in the resource recycling environment 10 by way of a combination or the like of the processing apparatus identification information uniquely assigned to each processing apparatus in each of the processing plants 130 and process identification information uniquely assigned in each of the processing apparatuses. Instead of this, the process event generation unit 940 may generate the process event identification information incrementally, for example, or may also generate the process event identification information according to the reception date and time of the process information.

In addition, the process event identification information may include information indicating a type of a process. For example, the information indicating the type of the process may be "outflow" indicating that the resource is shipped from the processing plant 130 or the like, "inflow" indicating that the resource 100 (including the resource 100 processed in an upstream process step) is fed to the processing plant 130 or the like, "processing" indicating that the resource 100 is processed by the processing plant 130 or the like, "stock" indicating that a product or intermediate product obtained by processing the resource 100 is in stock in the processing plant 130, or the like. The information indicating the type of such a process may be represented by using a code corresponding to the type of the process as described above. At this time, the information indicating the type of the process may define the type of "processing" in more detail. For example, the information indicating the type of the process may be more specific to specify a processing step such as "flaked", "pelletized", or "formed into bottles".

The processing apparatus identification information is information for identifying the processing apparatus used in the resource recycling environment 10. The processing apparatus identification information may be a unique value for each of the processing apparatuses such as a manufacturing number or a serial number of the processing apparatus. The processing apparatus identification information may be a value in which plant identification information for identifying the processing plant 130 and identification information of the processing apparatus in the plant are combined with each other, or the like. In addition, with regard to the process event information related to the pickup process of the resource 100 by the collection vehicle 120, the processing apparatus identification information may be information for identifying the collection vehicle 120 such as a number of the collection vehicle 120.

The process information is information related to the resource 100 having been through a process and details of the process. The process information is generated in each of the processing plants 130. The process information may include at least one of the process identification information, a process date and time, a process location, one or more sets of ingredient information, or one or more sets of product information, or all of those.

The process identification information is information for identifying the process of the resource 100 set as the target of the process event in the collection apparatus 110. The process date and time and the process location are information indicating the date and time and the location in which the target resource 100 has been through the process. In the pickup process by the collection vehicle 120, the process event generation unit 940 may receive timing at which the resource 100 is picked up and location information of the collection apparatus 110 at the timing from the collection apparatus 110, and may set those as the process date and time and the process location.

The ingredient information is information related to an ingredient in the process which is set as the target of the process event. The ingredient information may include the collection event identification information or at least one of the process event identification information, the type information, or amount information, or all of those.

The collection event identification information or the process event identification information is information for identifying the upstream collection event or process event for supplying the ingredient to target processing, which is situated on an upstream side of the target processing. When the target processing is the primary processing on the resource 100 collected by the collection vehicle 120, the ingredient information includes the collection event identification information for identifying the collection event with regard to the collection by the collection vehicle 120. When the target processing is the secondary or subsequent processing on the resource 100 processed by the processing plant 130 on the upstream side, the ingredient information includes the process event identification information for identifying the process event with regard to the upstream process. At this time, when a plurality of types of products (intermediate products) are produced by the upstream processing, the ingredient information may include product identification information for specifying a product set as an ingredient of the target processing among the products produced by the upstream processing. The type information and the amount information are information indicating the type and the amount of the ingredient used in the target processing.

The product information is information related to the product (intermediate product) manufactured by the target processing in the process event. The product information may include at least one of the product identification information, the type information, the amount information, or recycle information, or all of those.

The product identification information is information for identifying a product manufactured by the target processing. The product identification information may be unique identification information for each product such as a manufacturing number, a serial number, a lot number, or the like of the product. The type information and the amount information are information indicating the type and the amount of the product manufactured by the target processing. Note that as in the pickup process of the resource 100 by the collection vehicle 120, with regard to the process in which modification, working, or the like is not performed on the resource 100, the type information and the amount information in the product information may be the same as the type information and the amount information in the ingredient information. The recycle information is information indicating by which degree of recycling the product manufactured by the target processing has been manufactured. The recycle information may be information indicating a recycling rate, a recycle rate, or the like as an example.

In the above described configuration, with respect to the process of the resource 100, the process information may include various pieces of information such as at least one of a provider or processor name (an individual name or a company name), a product name, the unit of the product (weight (kg or the like), a volume (liter or the like), or a number of pieces (100 pieces or the like)), a product characteristic, an ingredient name, the unit of the ingredient, an ingredient characteristic, or certification information or the like of a public institution for the product. In addition, with respect to the delivery of the resource 100, the process information may include various pieces of information such as at least one of delivery information, a delivery ID, transportation company information, delivery vehicle information, receipt and shipment dates and times, or travelling route information. In addition, the provider information may include at least one of information equivalent to personal information, information selected to be kept secret by the provider, or the like as non-disclosure information. In addition, the resource management apparatus 150 may include information that becomes know-how on a manufacturing step (such as a type, an amount, and the like of additive) in the collection information of the process information as non-disclosure information. The resource management apparatus 150 may store information selected not to be disclosed to other companies (such as composition information of the product) in the provider DB 930 in association with the provider identification information or processor identification information for identifying the processor and the collection event identification information or the process event identification information. The resource management apparatus 150 may have such a configuration that disclosure or non-disclosure can be set for each type of information by each of the provider or the processor, and may store the setting information about the disclosure/non-disclosure in the provider DB 930 in association with the provider identification information or the processor identification information.

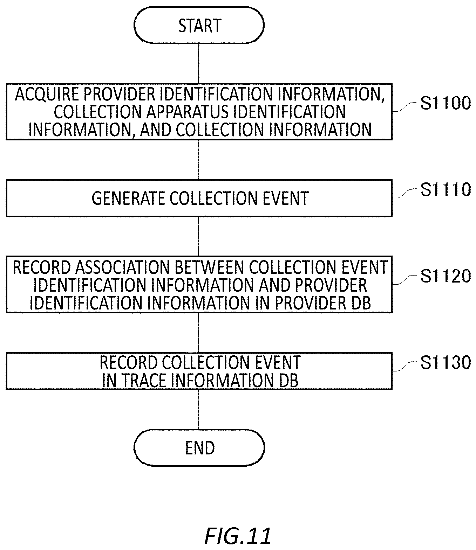

Fig. 11 illustrates an operation flow related to a resource collection in the resource management apparatus 150 according to the present embodiment. In S1100, in response to provision of the resource 100 that is to be recycled to the collection location, the acquisition unit 900 acquires the collection information, the collection apparatus identification information, and the provider identification information from at least one of the collection apparatus 110 or a communication terminal of the provider.

When the collection apparatus 200 is used as the collection apparatus 110, the collection apparatus 200 outputs the collection information and the collection apparatus identification information to the communication terminal of the provider who has provided the resource 100. The communication terminal of the provider transmits the collection information and the collection apparatus identification information which are input from the collection apparatus 200 to the resource management apparatus 150 together with the provider identification information. Accordingly, the acquisition unit 900 receives the collection apparatus identification information for identifying the collection apparatus 200 provided in the collection location, the collection information, and the provider identification information from the communication terminal of the provider. Note that the collection apparatus 200 may transmit at least part of the collection information to the resource management apparatus 150 without intermediation of the communication terminal of the provider.

When the collection apparatus 600 is used as the collection apparatus 110, the collection apparatus 600 receives the provider identification information from the communication terminal used by the provider of the resource 100, and transmits the provider identification information, the collection apparatus identification information, and the collection information to the resource management apparatus 150. Accordingly, the acquisition unit 900 receives the provider identification information, which has been received by the collection apparatus 600 provided in the collection location from the communication terminal of the provider, the collection apparatus identification information for identifying the collection apparatus 110, and the collection information from the collection apparatus 600.

Instead of the above described two configurations, the collection apparatus 110 may transmit the collection information and the collection apparatus identification information to the resource management apparatus 150 in response to the provision of the resource 100, and the communication terminal of the provider may transmit the location information to the resource management apparatus 150. In this case, the acquisition unit 900 may specify the provider who has provided the resource 100 to the collection location based on a location of the communication terminal. For example, in response to reception of the collection information and the collection apparatus identification information from the collection apparatus 110, the acquisition unit 900 refers to location information of the communication terminal of each of the providers at the collection date and time. Then, the acquisition unit 900 may specify a user of the communication terminal located closest to the collection apparatus 110 at the collection date and time as the provider of the resource 100. At this time, when the installment location of the collection apparatus 110 may move, the acquisition unit 900 may also refer to the location information from the collection apparatus 110 to specify the provider of the resource 100 for the collection apparatus 110.

In S1110, the collection event generation unit 910 generates the collection event of the resource 100 by using the collection information and the collection apparatus identification information which are received from the communication terminal of the provider or the collection apparatus 110. At this time, the collection event generation unit 910 generates the collection event identification information to be added to the collection event information.

In S1120, the collection event generation unit 910 records an association between the collection event identification information of the collection event generated in response to the provision of the resource 100 to the collection location and the provider identification information of the provider who has provided the resource 100 to the collection location in the provider DB 930. In S1130, the trace processing unit 950 records the collection event information of the collection event generated by the collection event generation unit 910 in the trace information DB 960.

As described above, in response to the provision of the resource 100 to the collection location, the resource management apparatus 150 can generate the collection event to be recorded in the trace information DB 960, and can also record the association between the provider and the collection event in the provider DB 930. Thus, the resource management apparatus 150 can separately manage the collection event of the resource 100 and the provider of the resource 100, and while an access to the information related to the provider of the resource 100 is restricted, it is possible for trace information including the collection event of the resource 100 and the subsequent process event to be abled to be more widely disclosed.

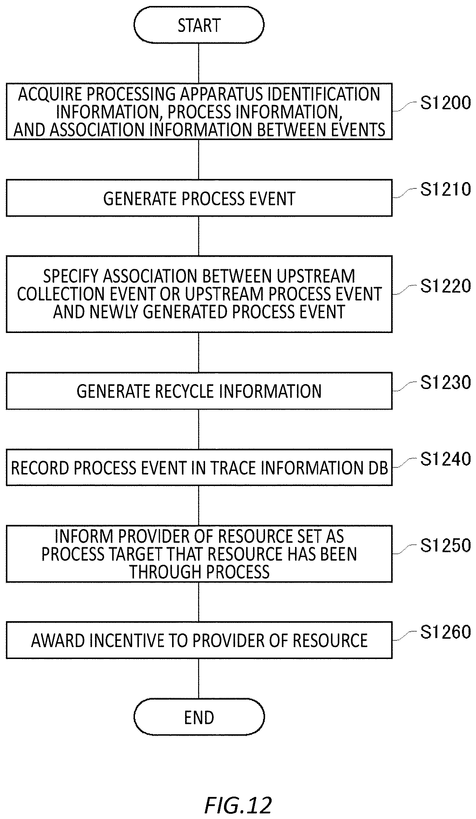

Fig. 12 illustrates an operation flow related to a resource process in the resource management apparatus 150 according to the present embodiment. In S1200, the acquisition unit 900 acquires the processing apparatus identification information, the process information, and information related to an association between events from the collection vehicle 120 or the processing plant 130. At this time, when the collection event or the process event which is on the upstream side of the process event set as the target is not specified, the process information may include information related to the association between the events instead of the collection event identification information, the process event identification information, or the like in the ingredient information.

In S1210, the process event generation unit 940 generates the process event of the resource 100 based on the process information. In S1220, the trace processing unit 950 specifies an association between the upstream collection event or the upstream process event and the process event newly generated in S1210.

At this time, based on the location information of the collection vehicle 120 which collects the resource 100, the trace processing unit 950 may specify an association between the collection event of one or more resources 100 and the process event indicating pickup of one or more resources 100 to the collection vehicle 120. For example, in response to reception of the process information indicating pickup of the resource 100 from the collection apparatus 110, the trace processing unit 950 specifies the collection vehicle 120 located closest to the collection apparatus 110 at the pickup date and time (the process date and time) included in the process information by using the location information of each of the collection vehicles 120. Thus, the trace processing unit 950 can associate the collection event of one or more resources 100 picked up by the collection vehicle 120 with the process event with regard to the pickup by the collection vehicle 120.

In addition, in response to detection that the collection vehicle 120 which has collected the resource 100 arrives at the processing plant 130, the trace processing unit 950 may specify an association between the collection event with regard to the resource 100 collected by the collection vehicle 120 and the process event generated in response to the process of the resource 100 in the processing plant 130. For example, the process event generation unit 940 generates a first process event in response to pickup of the resource 100 from the collection apparatus 110 to the collection vehicle 120, and generates a second process event in response to supply of the resource 100 from the collection vehicle 120 to the processing plant 130a or the processing plant 130b. In this case, the process event information of the second process event may include a number or the like of the collection vehicle 120 as illustrated in Fig. 8 as an example as the information related to the association between the first process event and the second process event. By collating information related to this association with the processing apparatus identification information included in the other process event information already stored in the trace information DB 960, the trace processing unit 950 can specify the first process event to which the second process event is to be associated. At this time, since one or more collection events are associated with the first process event, as a result, the trace processing unit 950 can indirectly specify the association between each of the collection events and the second process event with regard to the process in the processing plant 130.

In addition, in S1210, in response to a second process to be performed on the resource 100 on which a first process has been performed, the process event generation unit 940 generates the second process event of the resource 100. In this case, the trace processing unit 950 may specify an association between the second process event and the first process event generated in response to the first process having been performed.

For example, in response to the second process to be performed in the processing plant 130c on the resource 100 on which the first process has been performed in the processing plant 130a, the process event generation unit 940 generates the second process event of the resource 100. In this case, the processing plant 130a assigns the product identification information to each lot of a product (intermediate product) to be shipped to the processing plant 130c, and the processing plant 130c acquires the product identification information of the product supplied from the processing plant 130a for each lot to be associated with the lot of the product of the processing plant 130c. The trace processing unit 950 may specify the association between the first process event and the second process event by using an association between the lot of the product of the processing plant 130a and the lot of the product of the processing plant 130c.

Note that a case is also considerable where the processing plant 130 manufactures a lot of a product by the second process using, as ingredients, a plurality of products (intermediate products) obtained by processing the plurality of resources 100 by a plurality of first processes associated with mutually different process events. For example, the processing plant 130a may manufacture the lot of the product to be shipped to the processing plant 130c by using both the plurality of resources 100 picked up by the collection vehicle 120a and the plurality of resources 100 picked up by the collection vehicle 120b as the ingredients. In view of the above, in response to the plurality of resources 100 to be processed by the second process after having been respectively processed by the plurality of first processes, the trace processing unit 950 may specify associations between the second process event and the plurality of first process events respectively generated in response to the plurality of first processes.

In response to a state where the association between the preceding collection event or the preceding process event and the following process event is successfully specified, the trace processing unit 950 adds the collection event identification information of the preceding collection event or the process event identification information of the preceding process event to the ingredient information in the process event information with regard to the following process event.

In S1230, the trace processing unit 950 generates the recycle information of the process event generated in S1210. Since a new ingredient (non-recycled product) is not input to the collected resource 100, the trace processing unit 950 may set the recycle information in the process event information with regard to the pickup process by the collection vehicle 120 as recycling rate of 100%. In addition, in the processing plant 130, when a product is manufactured by adding a non-recycled product to a recycled product using the resource 100, the trace processing unit 950 may calculate a recycling rate based on a recycling rate of the recycled product and a ratio of the recycled product and the non-recycled product (for example, a weight ratio). For example, by using a calculation formula such as "recycling rate of product = recycling rate of recycled product × weight of recycled product / (weight of recycled product + weight of non-recycled product)", the trace processing unit 950 may calculate the recycling rate by multiplying a recycling rate of the recycled product serving as the ingredient by a ratio of a weight of the recycled product to a weight of whole ingredients.

In S1240, the trace processing unit 950 records the process event information in the trace information DB 960. In S1250, in response to generation of a process event using a certain resource 100 as an ingredient directly or indirectly, the information provision unit 970 informs the provider of the resource 100 set as the process target that the resource 100 has been through the process. In the present embodiment, in response to a state where a new process event is generated and recorded in the trace information DB 960, the information provision unit 970 specifies the upstream collection event and the upstream process event by using the collection event identification information or the process event identification information in the ingredient information in the process event information of the new process event, and specifies the collection event of each of one or more resources 100 used as the direct or indirect ingredient of the new process event by repeating this until the event reaches the collection event. Then, the information provision unit 970 specifies the provider by using the provider DB 930 with regard to each of the specified collection events, and informs the communication terminal of each of the specified providers that the resource 100 has been through the process.

In S1260, the incentive awarding unit 980 awards an incentive to the provider of the resource 100 in response to the resource 100 having been recycled. In the present embodiment, the incentive awarding unit 980 receives an instruction from the information provision unit 970 in response to a state where the process event related to the process set as an incentive award target is generated and registered in the trace information DB 960, and awards an incentive to the provider of the resource 100. At this time, the process set as the incentive award target may be a process in the final step of manufacturing the product 140 from the resource 100 in the processing plant 130f, the processing plant 130g, or the like. Instead of this, the process set as the incentive award target may also be a process in a step where the resource 100 has been certainly placed on a recycling flow in the processing plant 130a, the processing plant 130b, or the like, for example.

The incentive awarded by the incentive awarding unit 980 may be any reward for treating the provider favorably such as a point that can be used when a commodity or a service is to be purchased, a discount for the product 140 or the like that has been recycled or a service, an invitation to an event held in a specific place or held online, or the like. When a point of a membership service subscribed by the provider is to be awarded, the incentive awarding unit 980 may transmit an instruction for awarding a point to a membership system of such a membership service.

By performing the management of the resource process described above, each time a process of the resource 100 is performed, the resource management apparatus 150 can generates a new process event to be associated with the collection event or the process event that is the upstream process in which the ingredient in the process is supplied. Thus, the resource management apparatus 150 can record a flow of processes from the recycling of each of the resources 100 to the manufacturing of the product 140 as a series of the collection event and the process events.

Note that in S1240, the trace processing unit 950 may record the collection event and one or more process events with regard to the resource 100 as a blockchain in the trace information DB 960. By recording the trace information spanning from the recycling of each of the resources 100 to the manufacturing of the product 140 as the blockchain, the resource management apparatus 150 can avoid an alteration of the trace information stored in the trace information DB 960. Such trace information can be used to prove a course where each of the resources 100 is to be recycled and an origin or the like of the ingredient of the product 140.

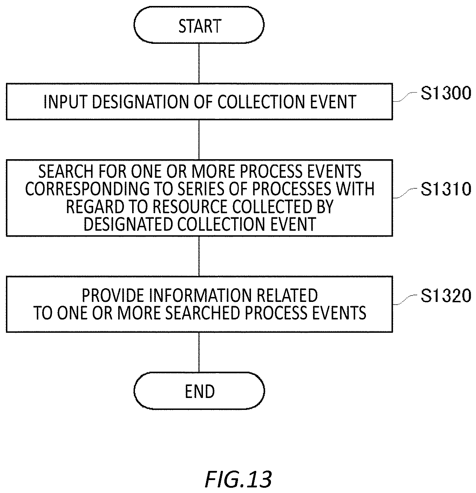

Fig. 13 illustrates an operation flow of outputting information related to a process of a collected resource in the resource management apparatus 150 according to the present embodiment. In S1300, the information provision unit 970 inputs a designation of a specific collection event from a mobile terminal or external equipment such as a terminal used in the processing plant 130. By using the provider DB 930, the information provision unit 970 may search for and output a plurality of collection events in which a user who has accessed the information provision unit 970 by using the mobile terminal or the like has become the provider, and may accept a selection input for selecting a specific collection event from among the plurality of these collection events.

In S1310, by using the trace information DB 960, the information provision unit 970 searches for one or more process events corresponding to a series of processes performed on the resource 100 collected in the designated collection event. For example, by searching for the process event information in which the collection event identification information of the designated collection event is registered in the ingredient information from a plurality of pieces of process event information stored in the trace information DB 960, the information provision unit 970 searches for a process event on a downstream side in which the resource 100 collected by the designated collection event is used as a direct ingredient. The information provision unit 970 searches for a process event on a further downstream side by searching for the process event information in which the process event identification information of the searched process event is registered in the ingredient information. By repeating this, the information provision unit 970 can search for a series of process events corresponding to a series of processes performed on the resource 100 collected in the collection event designated in S1300 from the trace information DB 960.

In S1320, the information provision unit 970 provides information related to one or more searched process events to a mobile terminal or the like of the user who has accessed the information provision unit 970. The information provision unit 970 may perform display processing or the like for causing the mobile terminal or the like to display the information related to a series of process events on the resource 100 collected by the designated collection event in an order or reverse order of the processes.

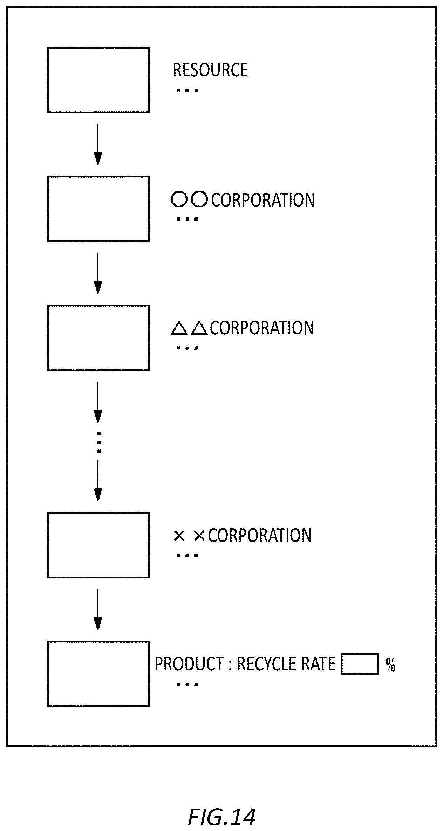

Fig. 14 illustrates an example of information related to a process of a collected resource which is output by the resource management apparatus 150 according to the present embodiment. The information provision unit 970 may perform display processing of causing the mobile terminal or the like of the user to display information exemplified in the present drawing.

In the example of the present drawing, the information provision unit 970 generates a display screen in which information related to the resource 100 collected in the designated collection event and information with regard to each of a series of process events that are on the downstream side of this collection event are displayed in an order from the upstream side to the downstream side. The information displayed with respect to the collection event may include at least part of the collection information illustrated in Fig. 10. The information displayed with respect to the process event may include at least part of the process information illustrated in Fig. 10, and may include information related to a company or the like which has performed the process which is specified by using the processing apparatus identification information. In addition, the information provision unit 970 may generate a display screen in which at least part of the product information (for example, a recycle rate) of the process event at the downstream end is displayed as the information related to the product. At this time, in association with information with regard to each of the collection event and a series of process events, the information provision unit 970 may display an image representing an external appearance of the resource 100 having been through the process step.

The resource management apparatus 150 described above can display a flow of a series of recycling processes on the resource 100 for the user who is a consumer or the like.

In addition, the resource management apparatus 150 can set that a provider of the resource 100 is allowed to select the collection event of each of the resources 100 provided by the provider, and can display a flow of a series of recycling processes starting from the selected collection event for the provider of the resource 100. Thus, the resource management apparatus 150 can raise the interests of the consumer towards the recycling of the resource 100 and recommend purchase of the product 140 with a still higher recycle rate so that it is possible to promote a conservation of earth resources and a protection of an earth environment. In addition, when an incentive is awarded to the provider in response to the resource 100 having been recycled, the resource management apparatus 150 can further raise the interests of the consumer towards the recycle by the resource 100 and promote the conservation of the earth resources and the protection of the earth environment.

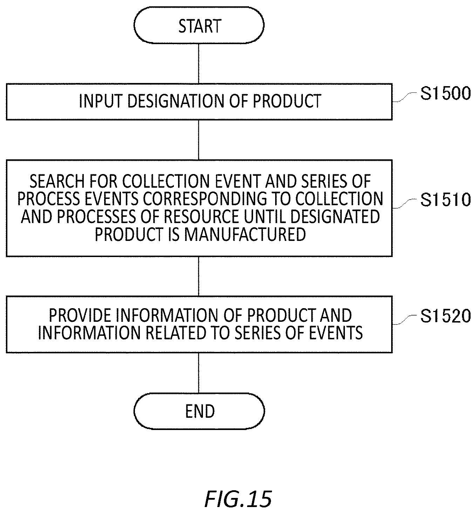

Fig. 15 illustrates an operation flow of outputting information related to a product in the resource management apparatus 150 according to the present embodiment. In S1500, the information provision unit 970 inputs a designation of the product 140 from the mobile terminal or external equipment such as the terminal used in the processing plant 130. This designation of the product may be the product identification information for specifying each of the products 140 such as a manufacturing number, a serial number, a lot number, or the like of the product 140.

In S1510, by using the trace information DB 960, the information provision unit 970 searches for one or more process events corresponding to a series of processes performed to manufacture the designated product 140 and the collection event while tracing back from the process event at the downstream end. For example, the information provision unit 970 searches for the process event information which includes, in the product information, the product identification information which matches the product identification information such as a manufacturing number, a serial number, or a lot number of the designated product 140 from the plurality of process events stored in the trace information DB 960. This process event corresponds to the process at the downstream end in a series of processes of manufacturing the designated product 140, and corresponds to the process in the processing plant 130f when the product 140a is designated in S1500, for example.

Then, the information provision unit 970 performs tracing in an order from the process event corresponding to the process at the downstream end to the collection event or the process event on the upstream side by using the collection event identification information or the process event identification information which is registered in the ingredient information of the process event information. Thus, the information provision unit 970 can search for a series of the collection event and the process events performed until the designated product 140 is manufactured from the trace information DB 960.

In S1520, the information provision unit 970 provides information related to the one or more searched process events or the searched collection event to the mobile terminal or the like of the user who has accessed the information provision unit 970. The information provision unit 970 may perform display processing of causing the mobile terminal or the like to display the information related to a series of process events and the collection event performed to manufacture the designated product 140 in the order or reverse order of the processes.

Note that in S1500, the information provision unit 970 may input a designation of the entire products of a same type as in a certain model of a certain company as the designation of the product. In this case, the information provision unit 970 may perform the search in S1510 individually with regard to one or more products 140 relevant to the products of the designated type. Then, the information provision unit 970 may perform display processing of causing the mobile terminal or the like to display a series of searched process events and the searched collection event with regard to each of one or more products 140 in S1520. Instead of this, by using the series of searched process events and the searched collection event with regard to each of one or more products 140, the information provision unit 970 may specify a main route of the supply chain for the most products 140 to pass through from the collection of the resource 100 to the completion of the products. Then, the information provision unit 970 may perform display processing of causing the mobile terminal or the like to display the series of process events and the collection event with regard to the products 140 produced in this main route.

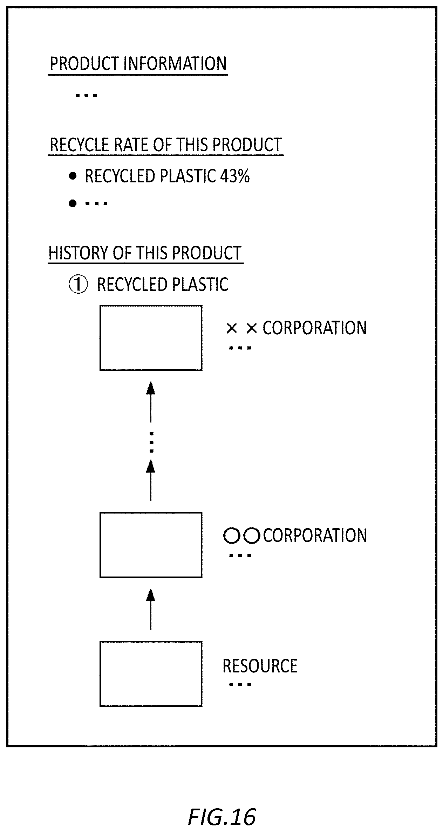

Fig. 16 illustrates an example of information related to a product which is output by the resource management apparatus 150 according to the present embodiment. The information provision unit 970 may perform display processing of causing the mobile terminal or the like of the user to display information exemplified in the present drawing.

In the example of the present drawing, the information provision unit 970 generates a display screen in which information related to the designated product 140 and information related to the series of process events and the collection event performed to manufacture the product 140 are displayed in an order from the downstream side to reach the upstream side. The information related to the product 140 may include at least part of the product information illustrated in Fig. 10 in the process event at the downstream end. The information displayed with respect to the process event may include at least part of the process information illustrated in Fig. 10, and may include information related to a company or the like which has performed the process which is specified by using the processing apparatus identification information. The information displayed with respect to the collection event may include at least part of the collection information illustrated in Fig. 10. At this time, in association with the information with regard to each of the series of process events and the collection event, the information provision unit 970 may display the image representing the external appearance of the resource 100 having been through the process step.

The resource management apparatus 150 described above can display a flow of a series of recycling processes until the product 140 is manufactured for the user who is a consumer or the like. Thus, the resource management apparatus 150 can raise the interests of the consumer towards the ingredient of the products 140 and recommend purchase of the product 140 with a still higher recycle rate so that it is possible to promote the conservation of the earth resources and the protection of the earth environment.

Note that in the embodiment illustrated above, the resource management apparatus 150 is provided in a centralized manner for the plurality of collection vehicles 120 and the plurality of processing plants 130. Instead of this, the resource management apparatus 150 may be distributed to be arranged for each of an operator who manages the plurality of collection apparatuses 110, a pickup operator who operates the plurality of collection vehicles 120, and the plurality of processing plants 130 or arranged for each group of these operators.

For example, each operator who manages the plurality of collection apparatuses 110 may have a resource management apparatus including the configuration related to the collection event out of the acquisition unit 900 in Fig. 9, the collection event generation unit 910, and the provider recording unit 920. In addition, the pickup operator who operates the plurality of collection vehicles 120 and each of the processing plants 130 may have a resource management apparatus including the configuration related to the process event out of the acquisition unit 900, the process event generation unit 940, and the trace processing unit 950.

In this case, the provider DB 930 and the trace information DB 960 are achieved by a cloud storage, for example, and may be shared by a plurality of resource management apparatuses. The information provision unit 970 may be achieved as a cloud service which refers to such a cloud storage. Instead of this, the provider DB 930 and the trace information DB 960 may be achieved by a distributed ledger using storages of a plurality of resource management apparatuses.

Fig. 17 illustrates a configuration of a mobile terminal 1700 according to the present embodiment. The mobile terminal 1700 may function as a mobile terminal such as the mobile terminal 400 illustrated in Fig. 4. The mobile terminal 1700 may be a computer having a communication function such as a smartphone, a mobile phone, a tablet computer, or a personal computer (PC). The mobile terminal 1700 may function as each component illustrated in the present drawing by executing a resource management client program such as an application which visualizes the recycling of the resource 100.

The mobile terminal 1700 includes an acquisition unit 1710, a login processing unit 1720, a collection processing unit 1730, a communication unit 1740, and an information presentation processing unit 1750. The acquisition unit 1710 acquires the collection information and the collection apparatus identification information from the output unit 260 of the collection apparatus 200. In the present embodiment, the acquisition unit 1710 includes an image capturing apparatus and reads a code image displayed on the output unit 260 to acquire the collection information and the collection apparatus identification information which are encoded in the code image. Instead of this, by using near field communication such as NFC, the acquisition unit 1710 may receive the collection information and the collection apparatus identification information which are transmitted from the output unit 260.

In addition, when the collection apparatus 110 has a permanently affixed code instead of the output unit 260, the acquisition unit 1710 may read the code to acquire the collection apparatus identification information encoded in the code. In this case, the acquisition unit 1710 may generate the collection information in such a range (the collection date and time or the like) that the information can be generated on the mobile terminal 1700 side.

The login processing unit 1720 performs a login process on a service provided by the resource recycling environment 10 by using the resource management client program. As an example, the login processing unit 1720 displays a login screen on a display apparatus of the mobile terminal 1700, and performs the login process into the service in response to reception of inputs of a login ID and a password from the user.

The collection processing unit 1730 is connected to the acquisition unit 1710 and the login processing unit 1720. The collection processing unit 1730 associates the collection information and the collection apparatus identification information which are acquired by the acquisition unit 1710 with the provider identification information associated with the user logging into the service, and causes the communication unit 1740 to transmit the collection information and the collection apparatus identification information to the resource management apparatus 150. At this time, when the user is not logging into the service, the collection processing unit 1730 instructs the login processing unit 1720 to prompt the user to log into the service.

The communication unit 1740 is connected to the login processing unit 1720 and the collection processing unit 1730. The communication unit 1740 is connected, for example, to a cellular network, a wireless LAN, a wired LAN, or the like, and can communicate via these with the resource management apparatus 150. When an instruction of the collection processing unit 1730 is received, the communication unit 1740 transmits the collection information, the collection apparatus identification information, and the provider identification information to the resource management apparatus 150.

The information presentation processing unit 1750 is connected to the login processing unit 1720 and the communication unit 1740. The information presentation processing unit 1750 performs information presentation for visualizing the recycling of the resource 100 for the user. In response to a state where the communication unit 1740 receives a notification, which is transmitted by the information provision unit 970 in the resource management apparatus 150 in S1250 in Fig. 12, indicating that the resource 100 has been through the process, the information presentation processing unit 1750 presents the notification to the user by way of display or the like on the display apparatus of communication terminal 1700. In addition, in response to reception of the information provided from the information provision unit 970 in S1320 in Fig. 13, the information presentation processing unit 1750 may display the information illustrated in Fig. 14 on the display apparatus of the mobile terminal 1700. In addition, in response to reception of the information provided from the information provision unit 970 in S1520 in Fig. 15, the information presentation processing unit 1750 may display the information illustrated in Fig. 16 on the display apparatus of the mobile terminal 1700.

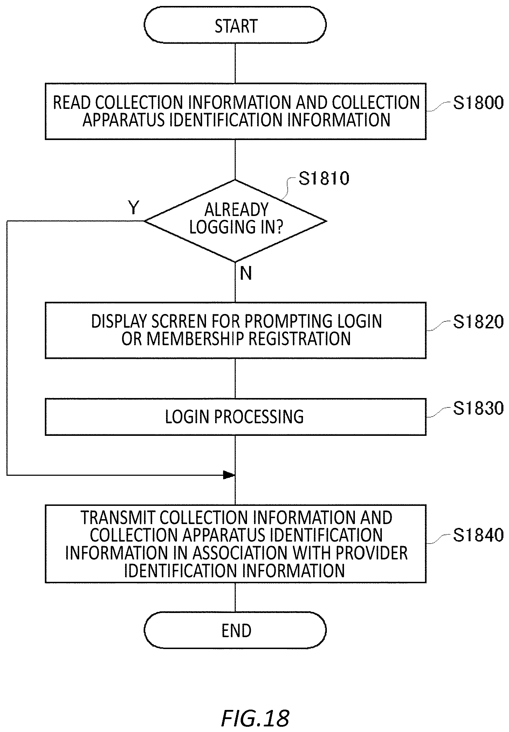

Fig. 18 illustrates an operation flow related to the resource collection in the mobile terminal 1700 according to the present embodiment. In S1800, the acquisition unit 1710 captures a code image which is output by the output unit 260 of the collection apparatus 200 in response to provision of the resource 100 to the collection apparatus 200, and reads the collection information and the collection apparatus identification information from the code image.

In S1810, the collection processing unit 1730 determines whether the user is logging into the service. When the user is logging into the service, the collection processing unit 1730 advances the process to S1840. When the user is not logging into the service, in S1820, the login processing unit 1720 performs a process of displaying a screen for prompting login or membership registration on the display apparatus of the mobile terminal 1700. In S1830, after a membership registration process is performed as required, in response to reception of the login information such as the login ID and the password, the login processing unit 1720 transmits the login information to the resource management apparatus 150, a server device which manages members of the service, or the like via the communication unit 1740 to perform the login process.

In S1840, the collection processing unit 1730 associates the collection information and the collection apparatus identification information which are acquired by the acquisition unit 1710 with the provider identification information of the user logging into the service, and transmits the collection information and the collection apparatus identification information to the resource management apparatus 150 via the communication unit 1740. The resource management apparatus 150 receives a set of the collection information, the collection apparatus identification information, and the provider identification information from the communication unit 1740 in S1100 in Fig. 11.

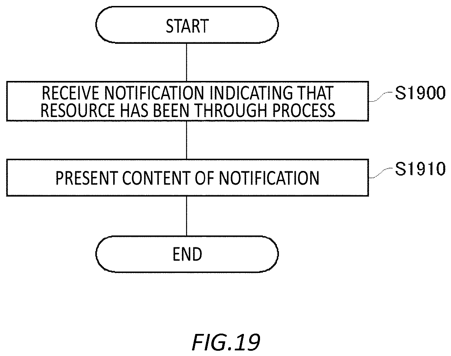

Fig. 19 illustrates an operation flow related to a process notification about a collected resource in the mobile terminal 1700 according to the present embodiment. In S1900, the communication unit 1740 receives a notification indicating that the resource 100 has been through the process, which is transmitted by the information provision unit 970 in the resource management apparatus 150 in S1250 in Fig. 12.

In S1910, the information presentation processing unit 1750 presents the notification to the user of the mobile terminal 1700 in a manner that the communication unit 1740 displays the received notification on the display apparatus of the mobile terminal 1700. At this time, when the user is not logging into the service, the information presentation processing unit 1750 may instruct the login processing unit 1720 to prompt the user to log into the service, and present the notification to the user who has logged in.

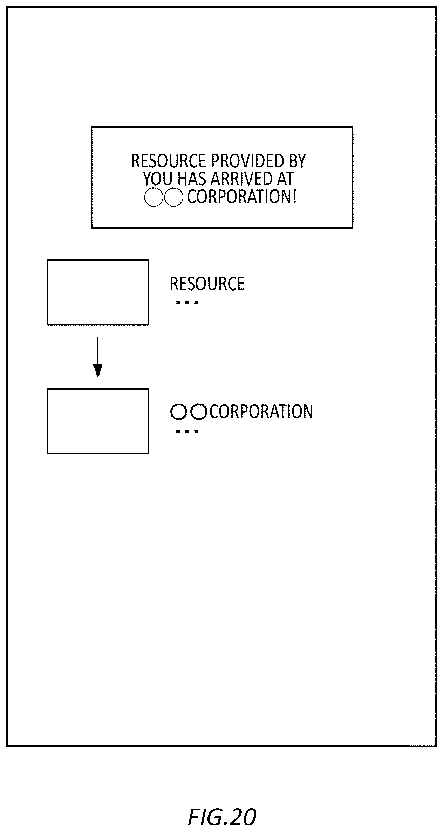

Fig. 20 illustrates a first display example related to the process notification about the collected resource in the mobile terminal 1700 according to the present embodiment. In response to a state where the processing plant 130 such as the processing plant 130a or the processing plant 130b which is to perform the process in the primary step receives the resource 100 from the collection vehicle 120, the resource management apparatus 150 generates the process event by the operation flow illustrated in Fig. 12. Then, in S1250 in Fig. 12, the resource management apparatus 150 informs the mobile terminal 1700 of the provider of the resource 100 that the resource 100 has been through the process.

The communication unit 1740 receives a notification from the resource management apparatus 150 in S1900 in Fig. 19, and the information presentation processing unit 1750 performs a process of displaying the notification in S1910 in Fig. 19. In a display example illustrated in the present drawing, the information presentation processing unit 1750 displays the notification indicating that the resource 100 has arrived at the processing plant 130 in the primary step. In the present embodiment, the information presentation processing unit 1750 performs a process of displaying an effect that the resource 100 has arrived at "∘∘ Corporation" which operates the processing plant 130. At this time, the resource management apparatus 150 may transmit information with regard to each of a series of events from the collection event with regard to the collection of the resource 100 to the process event with regard to the process set as the notification target to the mobile terminal 1700 by including the information in the notification. In response to this, similarly as in Fig. 14, the information presentation processing unit 1750 may perform a process of displaying the information with regard to each of the collection event and the series of the process events.

In the above described configuration, in response to a state where the resource 100 delivered to the processing plant 130 is processed by the processing plant 130 to be set as the recycle target, the resource management apparatus 150 generates the process event and issues the notification. Instead of this, in response to the delivery of the resource 100 to the processing plant 130, before the process of the resource 100 is performed, the resource management apparatus 150 may generate a process event which does not include the product information to be registered in the trace information DB 960 and issue a notification.

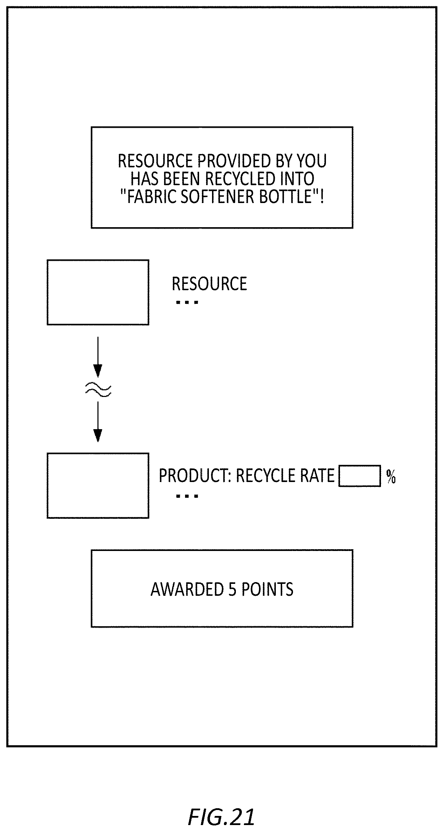

Fig. 21 illustrates a second display example related to the process notification about the collected resource in the mobile terminal 1700 according to the present embodiment. In the present embodiment, the resource management apparatus 150 generates a process event related to a process set as an incentive award target in the processing plant 130f as an example. Then, in S1250 in Fig. 12, the resource management apparatus 150 informs the mobile terminal 1700 that the resource 100 has been through the process.

The communication unit 1740 receives the notification from the resource management apparatus 150 in S1900 in Fig. 19, and the information presentation processing unit 1750 performs the process of displaying the notification in S1910 in Fig. 19. In the display example in the present drawing, the information presentation processing unit 1750 performs a process of displaying a notification indicating that the resource 100 has been recycled into the products 140a and 140b through the process in the final step by the processing plant 130f or the processing plant 130g. In the display example of the present drawing, the information presentation processing unit 1750 performs a process of displaying an effect that the resource 100 has been recycled into a "fabric softener bottle" as an example of the product 140a. At this time, the resource management apparatus 150 may transmit information with regard to each of a series of events from the collection event with regard to the collection of the resource 100 to the process event with regard to the process in the final step to the mobile terminal 1700 by including the information in the notification. In response to this, similarly as in Fig. 14, the information presentation processing unit 1750 may perform a process of displaying the information with regard to each of the collection event and the series of the process events.

In addition, the resource management apparatus 150 may transmit information with regard to an incentive to be provided to the provider of the resource 100 in response to the resource 100 having been recycled to the mobile terminal 1700 by being included in the notification. In response to this, the information presentation processing unit 1750 may perform a process of displaying the information with regard to the incentive to be awarded on the screen of the mobile terminal 1700.

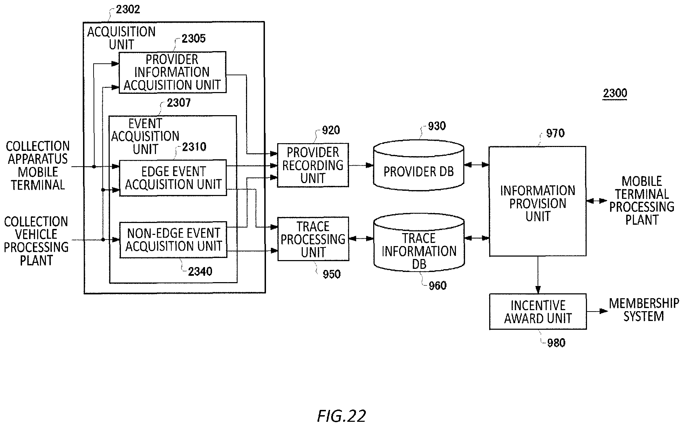

Fig. 22 illustrates a configuration of a resource management apparatus 2300 according to a first modified example of the present embodiment. In the resource recycling environment 10 illustrated in Fig. 1, in addition to the provider who provides the resource 100 to the collection apparatus 110, an operator of the collection vehicle 120 configured to provide the ingredient or intermediate product obtained by processing the resource 100 to the downstream processing plant 130 and the upstream processing plant 130 can also be regarded as "the provider of the resource" in a broad sense. In this modified example, the resource management apparatus 2300 also performs the information provision related to the recycling of the resource for the providers in a broad sense including not only the provider who provides the collection apparatus 110 to the resource 100 but also the operator of the collection vehicle 120 and the processing plant 130 or a user or the like of the resource management apparatus 150 belonging to the operator.

Herein, the resource management apparatus 2300 is a modified example of the resource management apparatus 150 illustrated in Fig. 1 and Fig. 9. A component assigned with a same reference sign as that of a component in the resource management apparatus 150 illustrated in Fig. 9 in the resource management apparatus 2300 has a function and a configuration which are similar to those of a component illustrated in Fig. 9, and descriptions thereof will be omitted except for the following differences. The resource management apparatus 2300 includes an acquisition unit 2302, the provider recording unit 920, the provider DB 930, the trace processing unit 950, the trace information DB 960, the information provision unit 970, and the incentive awarding unit 980. The acquisition unit 2302 has a provider information acquisition unit 2305 and an event acquisition unit 2307.

The acquisition unit 2302 includes the provider information acquisition unit 2305 and the event acquisition unit 2307. The provider information acquisition unit 2305 acquires the provider identification information for identifying the provider who has provided the resource. Similarly as in the acquisition unit 900, in response to the provision of the resource 100 that is to be recycled to the collection location, the provider information acquisition unit 2305 acquires the collection information, the collection apparatus identification information, and the provider identification information from at least one of the collection apparatus 110 or the communication terminal of the provider. In addition, in response to a state where the resource 100 is picked up by the collection vehicle 120 or the process of the resource 100 is to be performed in the processing plant 130, the provider information acquisition unit 2305 acquires the process information, the processing apparatus identification information, and the processor identification information from at least one of the collection vehicle 120 or the processing plant 130. Herein, since the processor is also the provider of the resource, the processor identification information is also a type of the provider identification information.

The resource management apparatus 2300 may store associations in advance between each processor and one or two or more processing apparatuses possessed by the processor. For example, the resource management apparatus 2300 may store the processing apparatus identification information of the one or two or more processing apparatuses in advance in the provider DB 930 or the like in association with the processor identification information of each processor. In this case, in response to reception of the process information and the processing apparatus identification information from at least one of the collection vehicle 120 or the processing plant 130, the acquisition unit 2302 may read the processor identification information associated with the processing apparatus identification information from the provider DB 930 or the like. In addition to the above, the acquisition unit 2302 may perform an operation other than an operation performed by the event acquisition unit 2307 which will be described below among the operations performed by the acquisition unit 900.

The event acquisition unit 2307 acquires a collection event of the resource 100 in response to the provision of the resource that is to be recycled. In addition, the event acquisition unit 2307 acquires a process event of the resource 100 in response to a process to be performed on the resource 100. The event acquisition unit 2307 includes an edge event acquisition unit 2310 and a non-edge event acquisition unit 2340.

The edge event acquisition unit 2310 acquires an edge event that is the collection event or the process event at the upstream end in the supply chain in which the trace information is traced. Similarly as in the collection event generation unit 910 in Fig. 9, the edge event acquisition unit 2310 may generate or acquire the edge event that is the collection event in response to the provision of the resource 100 to the collection location. In this modified example, the collection vehicle 120 or the processing plant 130 does not necessarily need to provide the ingredient information or the like used for the process with regard to the resource 100 (intermediate product) processed in the primary step or the secondary or subsequent steps. In this case, the edge event acquisition unit 2310 can use a frame of the collection event in Fig. 10 to generate the edge event in which the processor who has processed the resource 100 is regarded as the provider of the processed resource 100.

The edge event acquisition unit 2310 provides non-disclosure information that is not to be disclosed out of the collection event information acquired in connection to the collection event and the process event information acquires in connection to the process event to the provider recording unit 920. In addition, the edge event acquisition unit 2310 provides disclosed information that is set to be disclosed out of the collection event information acquired in connection to the collection event and the process event information acquired in connection to the process event to the trace processing unit 950.

The non-edge event acquisition unit 2340 acquires a non-edge event that is a process event subsequent to the event at the upstream end in the supply chain in which the trace information is traced. Similarly as in the process event generation unit 940 in Fig. 9, the non-edge event acquisition unit 2340 may generate or acquire the non-edge event that is the process event in response to the resource 100 having been through the process. The non-edge event acquisition unit 2340 provides non-disclosure information that is not to be disclosed out of pieces of process event information acquires in connection to the process events to the provider recording unit 920. In addition, the non-edge event acquisition unit 2340 provides disclosed information that is set to be disclosed out of the pieces of the process event information acquired in connection to the process events to the trace processing unit 950.

The provider recording unit 920 is similar to the provider recording unit 920 in Fig. 9. In this modified example, the provider recording unit 920 records an association between the collection event identification information for identifying the collection event of the resource 100 and the provider identification information of the provider of the resource 100 as the non-disclosure information in the provider DB 930. In addition, the provider recording unit 920 records an association between the process event identification information for identifying the process event of the resource 100 and the provider identification information of the provider of the resource 100 as the processor of the resource 100 as the non-disclosure information in the provider DB 930. At this time, the provider recording unit 920 records the information received as the non-disclosure information from the edge event acquisition unit 2310 and the non-edge event acquisition unit 2340 in the provider DB 930. The provider DB 930 is similar to the provider DB 930 in Fig. 9.

The trace processing unit 950 is similar to the trace processing unit 950 in Fig. 9. In this modified example, the trace processing unit 950 records a process event and an association between the collection events or process events of one or more resources set as process targets in the process event as the disclosed information in the trace information DB 960. At this time, the trace processing unit 950 records the information received as the disclosed information from the edge event acquisition unit 2310 and the non-edge event acquisition unit 2340 in the trace information DB 960. The trace information DB 960 is similar to the trace information DB 960 in Fig. 9.

The information provision unit 970 is similar to the information provision unit 970 in Fig. 9. In this modified example, in response to generation of the process event, the information provision unit 970 informs the provider of the resource 100 that is set as the process target (including the processor of the resource 100 or the processed resource 100) that the resource 100 (including the processed resource 100) has been processed. The incentive awarding unit 980 is similar to the incentive awarding unit 980 in Fig. 9. In response to the resource 100 (including the processed resource 100) having been recycled, the incentive awarding unit 980 awards an incentive to the provider of the resource 100 (including the processor of the resource 100 or the processed resource 100).

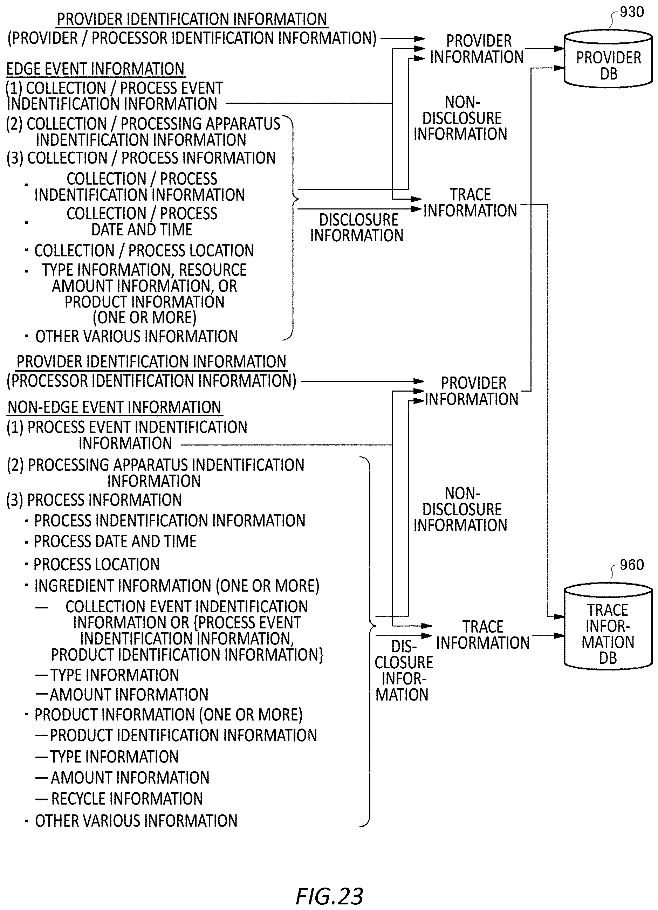

Fig. 23 illustrates an example of information to be stored in the provider DB 930 and the trace information DB 960 according to the first modified example of the present embodiment. Since a data structure of the information illustrated in the present drawing is a modified example of the data structure of the information illustrated in connection to Fig. 10, descriptions thereof will be omitted except for the following differences.

The provider DB 930 stores the provider information in which the provider identification information is associated with the collection event identification information. In this modified example, in principle, the provider DB 930 stores non-disclosure information that is set not to be disclosed among the collection event information of each of the collection events and the process event information of each of the process events. The trace information DB 960 stores disclosed information that may be disclosed among the collection event information of each of the collection events and the process event information of each of the process events.

In the example of the present drawing, edge event information corresponds to the collection event information or the process event information at the upstream end in the trace information recorded in the trace information DB 960. The collection event information is similar to the collection event information illustrated in Fig. 10. The process event information serving as the edge event information may be information which does not include the ingredient information in the process information among the process event information illustrated in Fig. 10. Note that in this modified example, each of the collection apparatuses 110, each of the collection vehicles 120, and each of the processing plants 130 may include various pieces of other information related to the collection or the process of the resource 100 (including various pieces of information exemplified in connection to Fig. 10) in the collection information or the process information.

In the example of the present drawing, non-edge event information corresponds to the process event information except for the process event information at the upstream end in the trace information which are recorded in the trace information DB 960. The process event information serving as the non-edge event information is similar to the process event information illustrated in Fig. 10. Note that in this modified example, each of the collection vehicles 120 and each of the processing plants 130 may include various pieces of other information related to the process of the resource 100 (including various pieces of information exemplified in connection to Fig. 10) in the process information.

Note that in this modified example, the processor of the resource 100 is also regarded as the provider of the processed resource 100. In view of the above, the provider DB 930 also stores, as a type of the provider identification information, processor information in which the processor identification information for identifying processor of the resource 100 is associated with the process event identification information.

In addition, in this modified example, the provider DB 930 stores the non-disclosure information as the provider information, and the trace information DB 960 stores the disclosed information as the trace information. Herein, the collection event identification information and the process event identification information among the event information are included in any of the provider information and the disclosed information. The collection apparatus identification information and the processing apparatus identification information may be recorded in the provider information and set not to be disclosed in principle or may be recorded in the trace information to be disclosed.

In addition, the collection identification information, the collection date and time, the collection location, the type information, the resource amount information, or at least part of various pieces of other information which are included in the collection information may be recorded in the provider information and set not to be disclosed in principle or may be recorded in the trace information and set to be disclosed. Similarly, the process identification information, the process date and time, the process location, the ingredient information (except for the collection event identification information and the process event identification information), the product information, or at least part of various pieces of other information which are included in the process information may be recorded in the provider information and set not to be disclosed in principle or may be recorded in the trace information and set to be disclosed. Note that since the collection event identification information and the process event identification information among the ingredient information included in the process information are required to specify the upstream event information, the collection event identification information and the process event identification information may be recorded in the trace information to be disclosed.

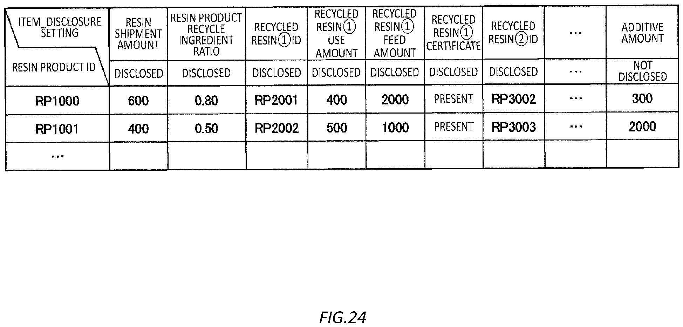

Fig. 24 illustrates an example of the process information according to the first modified example of the present embodiment. In the example of the present drawing, portions in connection to the ingredient information and the product information among the process information will be mainly illustrated. With regard to each of resin products represented by resin product IDs (resin product identifiers), the present drawing illustrates data of various items including a resin shipment amount, a resin product recycled ingredient ratio, a first recycled resin ID, a first recycled resin use amount, a first recycled resin feed amount, certification information of second recycled resin, a second recycled resin ID, and an additive amount.

The resin product ID, the resin shipment amount, and the resin product recycled ingredient ratio are equivalent to the product identification information, the amount information, and the recycle information in the product information in Fig. 23. The first recycled resin ID, the first recycled resin use amount, and the first recycled resin feed amount are equivalent to the product identification information and the amount information (the use amount and the feed amount) of the upstream product serving as the ingredient in the ingredient information (first ingredient information) in Fig. 23. The certification information of the second recycled resin and the second recycled resin ID are equivalent to the type information and the product identification information of the upstream product serving as the ingredient in the ingredient information (second ingredient information) in Fig. 23. Additive may be recorded as the ingredient information (third ingredient information) in Fig. 23, and the additive amount may be equivalent to the amount information in the third ingredient information.

The resource management apparatus 2300 may be able to set disclosure or non-disclosure of information for each item of the collection information and the process information. The resource management apparatus 2300 may accept a selection of the disclosure/non-disclosure on each item of the information for each of the providers or the processors, and store setting information of the disclosure/non-disclosure in the provider DB 930 or other storage units in association with the provider or the processor. The resource management apparatus 150 may preset the disclosure/non-disclosure on each information item included in the collection event or the process event.

In accordance with the resource management apparatus 2300 illustrated above, the processor of the resource 100 does not necessarily need to provide the ingredient information. In this case, the resource management apparatus 2300 may generate the process event as the edge event, and record the process event in the provider DB 930 and the trace information DB 960 in a procedure similar to Fig. 11.

In addition, since the processor of the resource 100 is also the provider in a broad sense, the resource management apparatus 2300 performs the information provision related to the recycling of the resource for the processor of the resource 100 too. Thus, in S1240 in Fig. 12, the information provision unit 970 may use the provider DB 930 to specify not only the provider with regard to the collection event at the upstream end with respect to the new process event but also the processor with regard to each of the process events that are directly or indirectly upstream with respect to the new process event, and may inform the communication terminal of each of the processors who have been specified that the resource 100 has been through the process. In addition, in S1240 in Fig. 12, the incentive awarding unit 980 may award an incentive to such a processor too.

In addition, the information provision unit 970 may allow an input of a designation of a specific process event in S1300 in Fig. 13. When the designation of the specific collection event is input, in S1310, the information provision unit 970 searches for one or more process events corresponding to a series of processes performed on the product (intermediate product) in the specific process event. Then, in S1320, the information provision unit 970 may provide information related to one or more searched process events to the mobile terminal or the like of the user similarly as in Fig. 14.

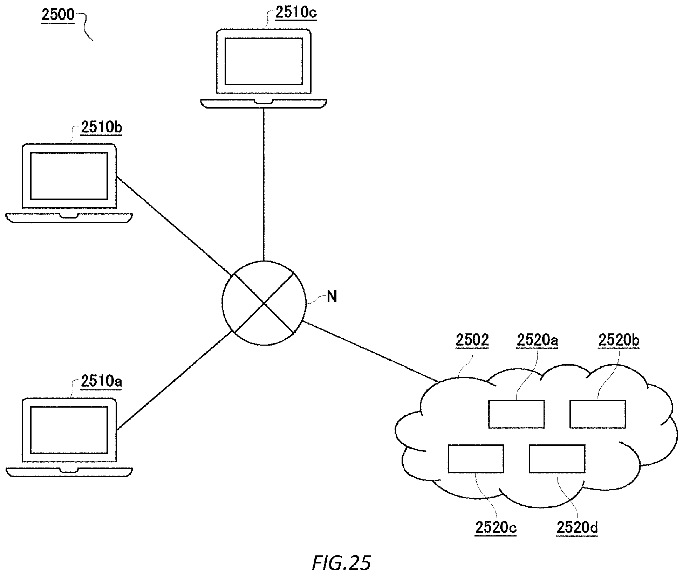

Fig. 25 illustrates a configuration of an information processing system 2500 according to a second modified example of the present embodiment. The information processing system 2500 is a system which assists the recycling of the resource. The information processing system 2500 stores and manages information related to some product or ingredient such as a resin ingredient that is an example of the resource 100 illustrated in, for example, Figs. 1 to 24, or a resin product that is an example of the intermediate product or product obtained by processing the resource 100 to perform a determination on whether a product such as the intermediate product or the product 140 illustrated in Figs. 1 to 24 is issued with a certificate of being a recycling product or a determination on whether the recycled resin that is an example of the intermediate product or the product 140 is transferred (for example, assigned). The information processing system 2500 includes terminal devices 2510a, 2510b, and 2510c and a blockchain network 2502. The terminal devices 2510a, 2510b, and 2510c and the blockchain network 2502 are mutually communicable via a network N. In the example illustrated in Fig. 25, the information processing system 2500 includes three terminal devices, but a number of terminal devices may be optionally set, and may also be two or less or four or more. Each of the terminal devices 2510a, 2510b, and 2510c may have a similar configuration or may also have a different configuration. In an embodiment, the terminal devices 2510a, 2510b, and 2510c are collectively referred to as a terminal device 2510 when a reference is made to the terminal devices without a distinction from each other.

The terminal device 2510 is an information processing device used by a user who uses a service provided by the information processing system 2500. The terminal device 2510 may be, for example, a personal computer, a smartphone, a tablet terminal, personal digital assistants (PDA), or a dedicated information processing device. At least one of a plurality of terminal devices 2510 may be a communication terminal such as the mobile terminal 400 or the mobile terminal 1700 used by the provider of the resource 100. At least one of a plurality of terminal devices 2510 may be a communication terminal used in the collection vehicle 120 or the processing plant 130. At least one of a plurality of terminal devices 2510 may be the collection apparatus 110 including a communication function or the collection apparatus 600 including a communication function.

The blockchain network 2502 is a platform to use a blockchain technology. The blockchain network 2502 has a distributed system to be processed by a plurality of computers (hereinafter, referred to as "node devices") existing on a network. Communication between the node devices is typically performed by peer to peer (P2P). With the adoption of P2P, even when a malfunction occurs in part of the node devices, a whole system is unlikely to go down, and system continuity is maintained. In the blockchain, transaction information between participants is summarized in blocks as transactions. Each block is connected in a chain form and stored and managed in a chronological order in each of the node devices. Approval of a new block is formed by consensus formation processing in a distributed network. Each block in the blockchain stores a hash value of a previous block. When each block is altered, the hash value is also changed, so that a change to the hash value of the following block is also required. For this reason, with the adoption of the blockchain technology, it is possible to construct a highly secure system in which such alteration is difficult.

The blockchain network 2502 is configured to include node devices 2520a, 2520b, 2520c, and 2520d. In the example illustrated in Fig. 25, four node devices are illustrated as the node devices included in the blockchain network 2502, but a number of node devices may be optionally set, and may also be three or less or five or more. Each of the node devices 2520a, 2520b, 2520c, and 2520d has a similar configuration. In an embodiment, the node devices 2520a, 2520b, 2520c, and 2520d are collectively referred to as a node device 2520 when a reference is made to the node devices without a distinction from each other.

The node device 2520 may be the resource management apparatus 150 or the resource management apparatus 2300 as an example. In this case, the resource recycling environment 10 may include a plurality of resource management apparatuses 150 or resource management apparatuses 2300. Each of the plurality of resource management apparatuses 150 or resource management apparatuses 2300 communicates with each part of the plurality of collection apparatuses 110, the plurality of collection vehicles 120, the plurality of processing plants 130, and the plurality of communication terminals used by the providers to perform distributed processing on the resource management in the resource recycling environment 10. Instead of this, the node device 2520 may perform distributed management on the trace information DB 960 in the resource management apparatus 150 in Fig. 9 or the resource management apparatus 2300 in Fig. 23. In addition, at least one of the communication terminal used by the provider of the resource 100, the communication terminal used in the collection vehicle 120 or the processing plant 130, the collection apparatus 110 or the collection apparatus 600 including the communication function, or the like may also function as the node device 2520.

As a modified example, the blockchain network 2502 may be replaced with another configuration which stores data and performs a process such as a server device, cloud computing, or edge computing. In addition, instead of the blockchain network 2502 alone, a plurality of any combinations of the blockchain network 2502, a server device, cloud computing, or edge computing may be adopted.

The network N is configured by a wireless network and a wired network. Examples of the network include the Internet, a local area network (LAN), a wide area network (WAN), a mobile phone network, a wireless LAN, 5th Generation (5G), 4th Generation (4G), Long Term Evolution (LTE), WiMax (registered trademark), infrared communication, Bluetooth (registered trademark), a wired LAN, a telephone line, a power line network, and a network compliant to IEEE1394 or the like.

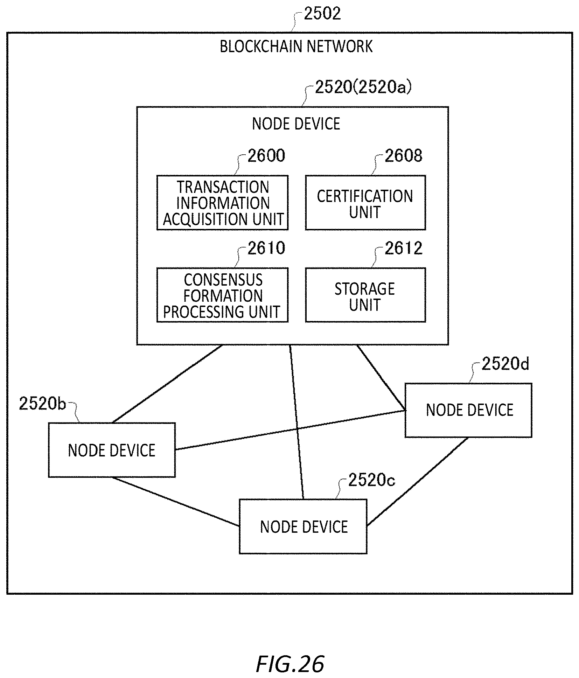

Fig. 26 illustrates a configuration of the blockchain network 2502 according to the second modified example of the present embodiment. In the example illustrated in Fig. 26, each of the node devices 2520 in the blockchain network 2502 includes, as main functional configurations, a transaction information acquisition unit 2600, a certification unit 2608, a consensus formation processing unit 2610, and a storage unit 2612. These functions are achieved when, for example, a control unit (processor) included in each of the node devices 2520 reads and executes a computer program stored in a storage device.

The transaction information acquisition unit 2600, the certification unit 2608, the consensus formation processing unit 2610, and the storage unit 2612 may be included in the trace processing unit 950 in Fig. 9 or Fig. 22. The storage unit 2612 may be equivalent to the trace information DB 960 in Fig. 9 or Fig. 22. The node device 2520 may further include other functional configurations illustrated in Fig. 9 or Fig. 22.

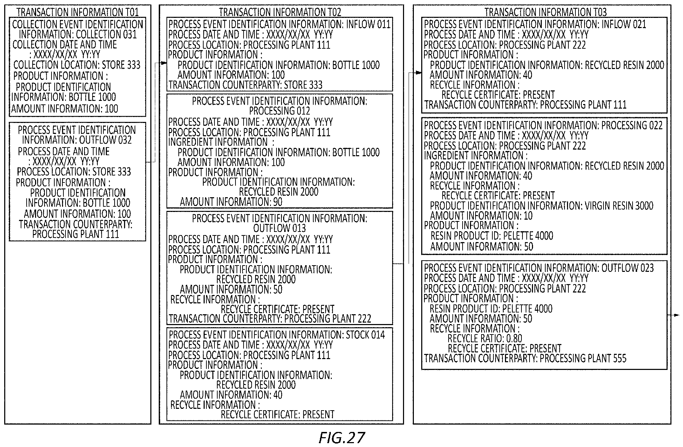

Fig. 27 illustrates an example of a data structure of the transaction information stored by the storage unit 2612 according to the second modified example of the present embodiment. Note that the data structure illustrated in Fig. 27 is an example, and the transaction information can adopt any data structure.

The transaction information according to this modified example includes, as event information, the collection event identification information or the process event identification information, and the process information. The transaction information according to this modified example may be recorded as a block including event information corresponding to an event generated in a certain process location (such as the processing plant 130).

In this modified example, the node device 2520 can manage both the collection information and the process information in Fig. 10 and Fig. 23 as "the process information" in a broad sense, and can identify the collection and the process by using information indicating a type of the process in the collection/process event identification information. In the example of the present drawing, the process date and time, the process location, the ingredient information, and the product information are designated as the process information.

With respect to the event information related to an outflow or an inflow of the resource 100, the process information may include information of a "transaction counterparty" indicating a counterparty of the transaction. Transaction counterparty information is information enabling an association when a resin product traded this time is to be used in a different event.

Herein the information of the transaction counterparty may designate a hash value of a public key of the transaction counterparty. The hash value of the public key designated as the information of the transaction counterparty may be an address of the resin product designated in the outflow.

Note that the transaction information may include one or more pieces of event information. Although details will be described below, when the transaction information is verified and approved by the consensus formation processing, the transaction information is stored as a structure which is called a block in the blockchain.

Note that the structure of the transaction information is not limited to the example in Fig. 27, and may also be any structure. The trace processing unit 950 in Fig. 9 and Fig. 22 may store the event information illustrated in Fig. 10 and Fig. 23 in a form of the transaction information illustrated in Fig. 27 in the trace information DB 960. In response to the collection of the resource 100, the trace processing unit 950 records the collection event identification information and the collection information among the event information illustrated in Fig. 10 and Fig. 23 in the transaction information. As the collection information, the collection date and time, the collection location, the product information, and the like may be recorded. In addition, in response to the resource 100 having been through the process, the trace processing unit 950 may record the process event identification information and the process information among the process event information.

As the process information, the process date and time, the process location, the ingredient information, and the product information may be recorded as described above. The ingredient information and the product information may record predetermined information among the event information illustrated in Fig. 10 and Fig. 23 according to content of the process. In addition, with regard to information which does not have a value among the event information illustrated in Fig. 10 and Fig. 23 according to the content of the collection and the process, information indicating that effect (blank, "N/A", or the like) may be recorded.

More specifically, the transaction information acquisition unit 2600 in the trace processing unit 950 acquires information that is to be recorded in the blockchain among the event information with regard to one or more events from the collection event generation unit 910 and the process event generation unit 940 in Fig. 9, or from the event acquisition unit 2307 in Fig. 22. The transaction information acquisition unit 2600 summarizes the acquired event information with regard to one or two or more events as a set of transaction information.

The transaction information acquisition unit 2600 may summarize the event information with regard to a number of events that can be recorded in a storage space per predetermined block as a set of transaction information. In addition, every predetermined period, the transaction information acquisition unit 2600 may summarize one or more pieces of event information acquired in the period as a set of transaction information. Instead of these, the transaction information acquisition unit 2600 may include event information with regard to a single event in the transaction information, and assign one block per event.

In the example of Fig. 27, transaction information T01 includes the collection event (collection event identification information "collection 031") generated in response to collection of the resource 100 by 100 units (amount information) specified by the product identification information "bottle 1000" in a "store 333" (collection location), and the process event (process event identification information "outflow 032") generated in response to shipment of the "bottle 1000" from the "store 333" to a "processing plant 111".

Transaction information T02 includes the process event (process event identification information "inflow 011") generated in response to feeding of the "bottle 1000" from the "store 333" to the "processing plant 111", the process event (process event identification information "process 012") generated in response to manufacturing of "recycled resin 2000" by 90 units using 100 units of the "bottle 1000" in the "processing plant 111" as an ingredient, the process event (process event identification information "outflow 013" generated in response to shipment of 50 units of the "recycled resin 2000" to a "processing plant 222" by the "processing plant 111", and the process event (process event identification information "stock 014") generated in response to holding of 40 units of the "recycled resin 2000" in the "processing plant 222" as inventory. As illustrated in Fig. 27, each event information may record information (recycle information or the like) according to the content of the collection or the process.

The certification unit 2608 awards a recycle certification to at least one of a product or intermediate product manufactured by processing the resource 100, or the resource 100. The certification unit 2608 awards the recycle certification to a product or the like which satisfies a predetermined condition including, for example, at least one of a condition where a recycle ratio is a threshold or more, a condition where a previously designated harmful substance is not used as an ingredient, a condition where a harmful substance is not discarded in a process of the resource 100, or the like. At this time, with regard to part of the conditions including the condition where the previously designated harmful substance is not used as the ingredient, the condition where the harmful substance is not discarded in the process of the resource 100, or the like, the certification unit 2608 may determine a condition satisfaction based on information associated with the processing plant 130 certified in advance.

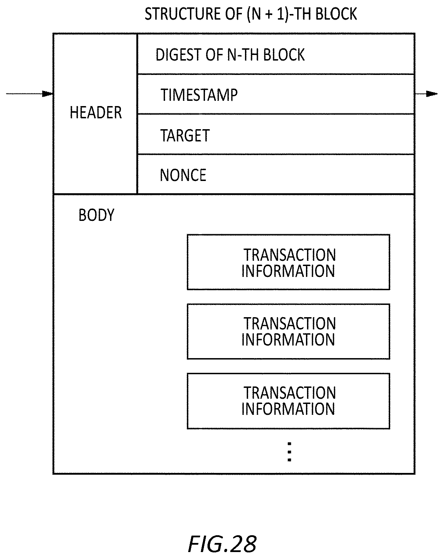

Fig. 28 illustrates an example of a data structure of the blockchain stored by the storage unit 2612 according to the second modified example of the present embodiment. Fig. 28 illustrates a structure of an (N + 1)-th block among blocks arranged in a chronological order.

A "header" of the block may store, for example, a digest of an N-th block, a timestamp, a target, and a nonce.

The "digest of the N-th block" stores, for example, identification information for each of the node devices 2520 and the terminal 2510 to uniquely identify the N-th block on the blockchain network. For example, a hash value of the block can be used as the digest of the N-th block.

The "timestamp" stores information related to a timestamp or a block number to be added when a block is created.

The "target" and the "nonce" are values to be used when the consensus formation processing is performed by using an algorithm such as, for example, practical Byzantine fault tolerance (PBFT) or endorsement-ordering-validation. The "target" is a value related to a difficulty level of the consensus formation processing. The "nonce" is any value created by the consensus formation processing when a block is created.

The consensus formation processing to be executed by the consensus formation processing unit 2610 will be specifically described. In the consensus formation processing, when the consensus formation processing unit 2610 discovers a nonce based on the digest (hash value) of the (N + 1)-th block to discover an appropriate nonce, the consensus formation processing unit 2610 stores the discovered nonce to create the (N + 1)-th block. For a purpose of discovering this appropriate nonce, the consensus formation processing unit 2610 of each blockchain node (the node device 2520) which performs the consensus formation processing repeatedly performs calculation of the digest of the block header while changing a value of the nonce.

Furthermore, when the blockchain is of a private type or a consortium type, a configuration may also be adopted where the consensus formation processing is not performed.

In the example of the present drawing, the "body" of the block stores a plurality of pieces of transaction information. However, the configuration is not limited to this, and one piece of transaction information may be stored in the "body". The transaction information stored in the block has same timestamp data.

Note that the structure of the block is not limited to the example in Fig. 28, and may also be any structure.

According to this modified example, the resource management apparatus 150 and the resource management apparatus 2300 can store the event information in the blockchain network 2502. Thus, the resource management apparatus 150 and the resource management apparatus 2300 can securely save the event information to avoid the alteration. In addition, it becomes possible for the resource management apparatus 150 and the resource management apparatus 2300 to prove a course in which the resource 100 is recycled, a course of the transaction, an origin or the like of each product or intermediate product by using the event information securely saved in a form of the transaction information.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer readable instructions stored on computer readable media, and/or processors supplied with computer readable instructions stored on computer readable media. Dedicated circuitry may include digital and/or analog hardware circuits, and may include integrated circuits (IC) and/or discrete circuits. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer readable medium may include any tangible device that can store instructions to be executed by a suitable device, and as a result, the computer readable medium having instructions stored thereon includes an article of manufacture including instructions which can be executed in order to create means for performing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

The computer readable instructions may be provided for a processor or programmable circuitry of a general purpose computer, special purpose computer, or other programmable data processing devices such as a computer locally or via a wide area network (WAN) such as a local area network (LAN), the Internet, or the like, and execute the computer readable instructions in order to create means for executing the operations designated in flowcharts or block diagrams. Examples of the processor include a computer processor, a processing unit, a microprocessor, a digital signal processor, a controller, a microcontroller, and the like.

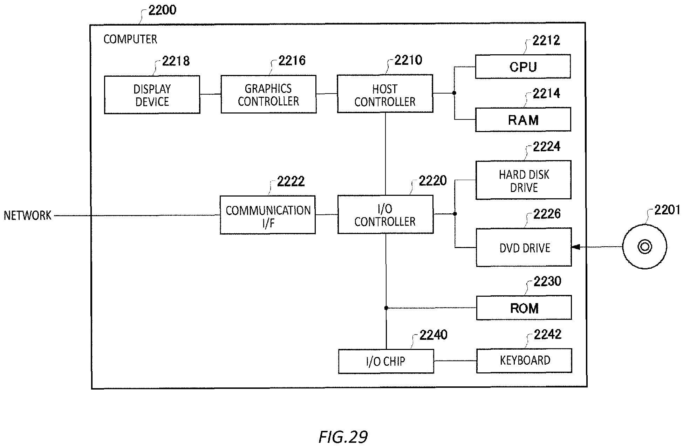

Fig. 29 illustrates an example of a computer 2200 in which a plurality of aspects of the present invention may be embodied in whole or in part. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, and the like.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing on the basis of processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, or the like, in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby acquiring the attribute value of the second attribute associated with the first attribute satisfying the predetermined condition.

The programs or software modules described above may be stored in a computer readable medium on or near the computer 2200. In addition, a recording medium such as a hard disk or a RAM provided in a server system connected to a dedicated communication network or the Internet can be used as a computer readable medium, thereby providing a program to the computer 2200 via the network.

While the present invention has been described by way of the embodiments, the technical scope of the present invention is not limited to the above-described embodiments.

It is apparent to persons skilled in the art that various modifications or improvements can be made to the above-described embodiments. It is also apparent from the description of the claims that embodiments added with such modifications or improvements can be included in the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: resource recycling environment;
100a to 100h: resource;
105: resource;
110a to 110d: collection apparatus;
120a and 120b: collection vehicle;
130a to 130g: processing plant;
140a and 140b: product;
150: resource management apparatus;
200: collection apparatus;
210: collection bin;
220: detection unit;
230: type detection unit;
240: resource amount detection unit;
245: pickup detection unit;
250: generation unit;
260: output unit;
270: transmission unit;
400: mobile terminal;
600: collection apparatus;
610: collection bin;
620: detection unit;
630: type detection unit;
640: resource amount detection unit;
645: pickup detection unit;
650: generation unit;
655: acquisition unit;
670: transmission unit;
800: photographing apparatus;
900: acquisition unit;
910: collection event generation unit;
920: provider recording unit;
930: provider DB;
940: process event generation unit;
950: trace processing unit;
960: trace information DB;
970: information provision unit;
980: incentive awarding unit;
1700: mobile terminal;
1710: acquisition unit;
1720: login processing unit;
1730: collection processing unit;
1740: communication unit;
1750: information presentation processing unit;
2300: resource management apparatus;
2302: acquisition unit;
2305: provider information acquisition unit;
2307: event acquisition unit;
2310: edge event acquisition unit;
2340: non-edge event acquisition unit;
2500: information processing system;
2502: blockchain network;
2510a to 2510c: terminal device;
2520a to 2520d: node device;
2600: transaction information acquisition unit;
2608: certification unit;
2610: consensus formation processing unit;
2612: storage unit;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. A resource management apparatus comprising:
an event acquisition unit (2307) which acquires, in response to provision of a resource that is to be recycled, a collection event of the resource;
a provider information acquisition unit (2305) which acquires provider identification information for identifying a provider who has provided the resource;
a provider recording unit (920) which records an association between collection event identification information for identifying the collection event of the resource and the provider identification information of the provider of the resource in a provider database (930); and
a trace processing unit (950) which traces a recycling process for the resource by using the collection event of the resource, wherein
the event acquisition unit (2307) acquires a recycling process event of the resource in response to the recycling process to be performed on the resource,
the trace processing unit (950) records, in a trace information database, an association between the recycling process event and the collection event of the resource which is set as a process target in the recycling process event, the resource including one or more resources,
the trace information database (960) records, as disclosed information, the association between the recycling process event and the collection event of the resource which is set as the process target in the recycling process event, the resource including one or more resources, and
the provider includes a plurality of providers, and the provider database (930) records, as non-disclosure information, the association between the collection event identification information and the provider identification information with regard to one of the providers.

2. The resource management apparatus according to claim 1, further comprising an information provision unit (970) which informs the provider of the resource which is set as the process target that the resource has been processed in response to acquisition of the recycling process event, wherein
the information provision unit (970) acquires the collection event associated with the recycling process event from the trace information database (960), and acquires the provider identification information associated with the collection event that is acquired from the provider database (930).

3. The resource management apparatus according to claim 1 or 2, wherein the provider information acquisition unit (2305) receives, from a collection apparatus provided in a collection location, the provider identification information received by the collection apparatus from a communication terminal of the provider and collection apparatus identification information for identifying the collection apparatus.

4. The resource management apparatus according to claim 1 or 2, wherein the provider information acquisition unit (2305) receives collection apparatus identification information for identifying a collection apparatus provided in a collection location and the provider identification information from a communication terminal of the provider.

5. The resource management apparatus according to claim 1 or 2, wherein the provider information acquisition unit (2305) specifies the provider who has provided the resource to a collection location based on a location of a communication terminal of the provider.

6. The resource management apparatus according to any one of claims 1 to 5, wherein the trace processing unit (950) records, based on location information of a collection vehicle which collects the resource, an association between the collection event of the one or more resources and the recycling process event indicating pickup of the one or more resources by the collection vehicle in the trace information database (960).

7. The resource management apparatus according to any one of claims 1 to 6, wherein
the event acquisition unit (2307) acquires a second process event of the resource in response to a second process to be performed on the resource on which a first process has been performed, and
the trace processing unit (950) further records, in the trace information database (960), an association between the second process event and a first process event acquired in response to the first process having been performed.

8. The resource management apparatus according to claim 7, wherein the first process includes a plurality of first processes, the resource includes a plurality of resources, the first process event includes a plurality of first process events, and after the plurality of resources are respectively processed by the plurality of first processes, in response to the plurality of resources to be processed by the second process, the trace processing unit (950) records, in the trace information database (960), associations between the second process event and the plurality of first process events respectively acquired in response to the plurality of first processes.

9. The resource management apparatus according to any one of claims 1 to 8, wherein in response to detection that a collection vehicle which has collected the resource arrives at a processing plant, the trace processing unit (950) records an association between the collection event with regard to the resource collected by the collection vehicle and the recycling process event to be acquired in response to the recycling process of the resource in the processing plant in the trace information database (960).

10. The resource management apparatus according to any one of claims 1 to 9, further comprising an incentive awarding unit (980) which awards an incentive to the provider of the resource in response to the resource having been recycled.

11. The resource management apparatus according to any one of claims 1 to 10, wherein the trace processing unit (950) records the collection event and the recycling process event with regard to the resource as a blockchain in the trace information database (960), the recycling process event including one or more recycling process events.

12. A computer-implemented resource management method comprising:
acquiring, by a resource management apparatus, in response to provision of a resource that is to be recycled, a collection event of the resource;
acquiring, by the resource management apparatus, a recycling process event of the resource in response to a recycling process to be performed on the resource;
acquiring, by the resource management apparatus, provider identification information for identifying a provider who has provided the resource;
recording, by the resource management apparatus, an association between collection event identification information for identifying the collection event of the resource and the provider identification information of the provider of the resource in a provider database; and tracing, by the resource management apparatus, the recycling process for the resource by using the collection event of the resource, wherein
the tracing includes recording, in a trace information database, an association between the recycling process event and the collection event of the resource which is set as a process target in the recycling process event, the resource including one or more resources,
the trace information database records, as disclosed information, the association between the recycling process event and the collection event of the resource which is set as the process target in the recycling process event, the resource including one or more resources, and
the provider includes a plurality of providers, and the provider database records, as non-disclosure information, the association between the collection event identification information and the provider identification information with regard to one of the providers.

13. A resource management program that, when executed by a computer, causes the computer to function as:
an event acquisition unit which acquires, in response to provision of a resource that is to be recycled, a collection event of the resource;
a provider information acquisition unit which acquires provider identification information for identifying a provider who has provided the resource;
a provider recording unit which records an association between collection event identification information for identifying the collection event of the resource and the provider identification information of the provider of the resource in a provider database; and
a trace processing unit which traces a recycling process for the resource by using the collection event of the resource, wherein
the event acquisition unit acquires a recycling process event of the resource in response to the recycling process to be performed on the resource,
the trace processing unit records, in a trace information database, an association between the recycling process event and the collection event of the resource which is set as a process target in the recycling process event, the resource including one or more resources, the trace information database records, as disclosed information, the association between the recycling process event and the collection event of the resource which is set as the process target in the recycling process event, the resource including one or more resources, and
the provider includes a plurality of providers, and the provider database records, as non-disclosure information, the association between the collection event identification information and the provider identification information with regard to one of the providers.

## Patentansprüche

1. Ressourcenverwaltungsvorrichtung, umfassend:
eine Ereigniserfassungseinheit (2307), die als Reaktion auf die Bereitstellung einer Ressource, die recycelt werden soll, ein Sammelereignis der Ressource erfasst;
eine Bereitstellerinformationserfassungseinheit (2305), die Bereitsteller-Identifikationsinformation zum Identifizieren eines Bereitstellers erfasst, der die Ressource bereitgestellt hat;
eine Bereitstelleraufzeichnungseinheit (920), die eine Zuordnung zwischen Sammelereignis-Identifikationsinformation zum Identifizieren des Sammelereignisses der Ressource und der Bereitsteller-Identifikationsinformation des Bereitstellers der Ressource in einer Bereitstellerdatenbank (930) aufzeichnet; und
eine Rückverfolgungsverarbeitungseinheit (950), die einen Recyclingprozess für die Ressource unter Verwendung des Sammelereignisses der Ressource rückverfolgt, wobei
die Ereigniserfassungseinheit (2307) ein Recyclingprozessereignis der Ressource als Reaktion auf den an der Ressource durchzuführenden Recyclingprozess erfasst,
die Rückverfolgungsverarbeitungseinheit (950) in einer Rückverfolgungsinformationsdatenbank eine Zuordnung zwischen dem Recyclingprozessereignis und dem Sammelereignis der Ressource, die in dem Recyclingprozessereignis als Prozessziel festgelegt ist, aufzeichnet, wobei die Ressource eine oder mehrere Ressourcen einschließt,
die Rückverfolgungsinformationsdatenbank (960) als Offenlegungsinformation die Zuordnung zwischen dem Recyclingprozessereignis und dem Sammelereignis der Ressource, die in dem Recyclingprozessereignis als das Prozessziel festgelegt ist, aufzeichnet, wobei die Ressource eine oder mehrere Ressourcen einschließt, und
der Bereitsteller eine Vielzahl von Bereitstellern einschließt, und die Bereitstellerdatenbank (930) als Nichtoffenlegungsinformation die Zuordnung zwischen der Sammelereignis-Identifikationsinformation und der Bereitsteller-Identifikationsinformation in Bezug auf einen der Bereitsteller aufzeichnet.

2. Ressourcenverwaltungsvorrichtung nach Anspruch 1, weiter umfassend eine Informationsbereitstellungseinheit (970), die den Bereitsteller der Ressource, die als das Prozessziel festgelegt ist, als Reaktion auf die Erfassung des Recyclingprozessereignisses darüber informiert, dass die Ressource verarbeitet worden ist, wobei
die Informationsbereitstellungseinheit (970) das dem Recyclingprozessereignis zugeordnete Sammelereignis aus der Rückverfolgungsinformationsdatenbank (960) erfasst, und die dem Sammelereignis zugeordnete Bereitsteller-Identifikationsinformation erfasst, die aus der Bereitstellerdatenbank (930) erfasst wird.

3. Ressourcenverwaltungsvorrichtung nach Anspruch 1 oder 2, wobei die Bereitstellerinformationserfassungseinheit (2305) von einer an einem Sammelort bereitgestellten Sammelvorrichtung die von der Sammelvorrichtung von einem Kommunikationsendgerät des Bereitstellers empfangene Bereitsteller-Identifikationsinformation und Sammelvorrichtungs-Identifikationsinformation zum Identifizieren der Sammelvorrichtung empfängt.

4. Ressourcenverwaltungsvorrichtung nach Anspruch 1 oder 2, wobei die Bereitstellerinformationserfassungseinheit (2305) Sammelvorrichtungs-Identifikationsinformation zum Identifizieren einer an einem Sammelort bereitgestellten Sammelvorrichtung und die Bereitsteller-Identifikationsinformation von einem Kommunikationsendgerät des Bereitstellers empfängt.

5. Ressourcenverwaltungsvorrichtung nach Anspruch 1 oder 2, wobei die Bereitstellerinformationserfassungseinheit (2305) den Bereitsteller, der die Ressource an einem Sammelort bereitgestellt hat, basierend auf einer Position eines Kommunikationsendgeräts des Bereitstellers spezifiziert.

6. Ressourcenverwaltungsvorrichtung nach einem der Ansprüche 1 bis 5, wobei die Rückverfolgungsverarbeitungseinheit (950), basierend auf Positionsinformation eines Sammelfahrzeugs, das die Ressource sammelt, in der Rückverfolgungsinformationsdatenbank (960) eine Zuordnung zwischen dem Sammelereignis der einen oder mehreren Ressourcen und dem Recyclingprozessereignis, das das Aufnehmen der einen oder mehreren Ressourcen durch das Sammelfahrzeug anzeigt, aufzeichnet.

7. Ressourcenverwaltungsvorrichtung nach einem der Ansprüche 1 bis 6, wobei
die Ereigniserfassungseinheit (2307) ein zweites Prozessereignis der Ressource als Reaktion auf einen zweiten Prozess, der an der Ressource durchzuführen ist, an der ein erster Prozess durchgeführt worden ist, erfasst, und
die Rückverfolgungsverarbeitungseinheit (950) weiter in der Rückverfolgungsinformationsdatenbank (960) eine Zuordnung zwischen dem zweiten Prozessereignis und einem ersten Prozessereignis, das als Reaktion darauf erfasst worden ist, dass der erste Prozess durchgeführt worden ist, aufzeichnet.

8. Ressourcenverwaltungsvorrichtung nach Anspruch 7, wobei der erste Prozess eine Vielzahl von ersten Prozessen einschließt, die Ressource eine Vielzahl von Ressourcen einschließt, das erste Prozessereignis eine Vielzahl von ersten Prozessereignissen einschließt, und nachdem die Vielzahl von Ressourcen jeweils durch die Vielzahl von ersten Prozessen verarbeitet worden ist, als Reaktion auf die Vielzahl von Ressourcen, die durch den zweiten Prozess zu verarbeiten ist, die Rückverfolgungsverarbeitungseinheit (950) in der Rückverfolgungsinformationsdatenbank (960) Zuordnungen zwischen dem zweiten Prozessereignis und der Vielzahl von ersten Prozessereignissen, die jeweils als Reaktion auf die Vielzahl von ersten Prozessen erfasst worden sind, aufzeichnet.

9. Ressourcenverwaltungsvorrichtung nach einem der Ansprüche 1 bis 8, wobei als Reaktion auf die Detektion, dass ein Sammelfahrzeug, das die Ressource gesammelt hat, an einer Verarbeitungsanlage ankommt, die Rückverfolgungsverarbeitungseinheit (950) in der Rückverfolgungsinformationsdatenbank (960) eine Zuordnung zwischen dem Sammelereignis in Bezug auf die durch das Sammelfahrzeug gesammelte Ressource und dem als Reaktion auf den Recyclingprozess der Ressource in der Verarbeitungsanlage zu erfassenden Recyclingprozessereignis aufzeichnet.

10. Ressourcenverwaltungsvorrichtung nach einem der Ansprüche 1 bis 9, weiter umfassend eine Anreizvergabeeinheit (980), die als Reaktion darauf, dass die Ressource recycelt worden ist, dem Bereitsteller der Ressource einen Anreiz vergibt.

11. Ressourcenverwaltungsvorrichtung nach einem der Ansprüche 1 bis 10, wobei die Rückverfolgungsverarbeitungseinheit (950) das Sammelereignis und das Recyclingprozessereignis in Bezug auf die Ressource als Blockchain in der Rückverfolgungsinformationsdatenbank (960) aufzeichnet, wobei das Recyclingprozessereignis eine oder mehrere Recyclingprozessereignisse einschließt.

12. Computerimplementiertes Ressourcenverwaltungsverfahren, umfassend:
Erfassen, durch eine Ressourcenverwaltungsvorrichtung, als Reaktion auf die Bereitstellung einer Ressource, die recycelt werden soll, eines Sammelereignisses der Ressource;
Erfassen, durch die Ressourcenverwaltungsvorrichtung, eines Recyclingprozessereignisses der Ressource als Reaktion auf einen an der Ressource durchzuführenden Recyclingprozess;
Erfassen, durch die Ressourcenverwaltungsvorrichtung, von Bereitsteller-Identifikationsinformation zum Identifizieren eines Bereitstellers, der die Ressource bereitgestellt hat;
Aufzeichnen, durch die Ressourcenverwaltungsvorrichtung, einer Zuordnung zwischen Sammelereignis-Identifikationsinformation zum Identifizieren des Sammelereignisses der Ressource und der Bereitsteller-Identifikationsinformation des Bereitstellers der Ressource in einer Bereitstellerdatenbank; und Rückverfolgen, durch die Ressourcenverwaltungsvorrichtung, des Recyclingprozesses für die Ressource unter Verwendung des Sammelereignisses der Ressource, wobei
das Rückverfolgen das Aufzeichnen, in einer Rückverfolgungsinformationsdatenbank, einer Zuordnung zwischen dem Recyclingprozessereignis und dem Sammelereignis der Ressource einschließt, die in dem Recyclingprozessereignis als Prozessziel festgelegt ist, wobei die Ressource eine oder mehrere Ressourcen einschließt,
die Rückverfolgungsinformationsdatenbank als Offenlegungsinformation die Zuordnung zwischen dem Recyclingprozessereignis und dem Sammelereignis der Ressource, die in dem Recyclingprozessereignis als das Prozessziel festgelegt ist, aufzeichnet, wobei die Ressource eine oder mehrere Ressourcen einschließt, und
der Bereitsteller eine Vielzahl von Bereitstellern einschließt, und die Bereitstellerdatenbank als Nichtoffenlegungsinformation die Zuordnung zwischen der Sammelereignis-Identifikationsinformation und der Bereitsteller-Identifikationsinformation in Bezug auf einen der Bereitsteller aufzeichnet.

13. Ressourcenverwaltungsprogramm, das, wenn es von einem Computer ausgeführt wird, den Computer dazu veranlasst, als Folgendes zu fungieren:
eine Ereigniserfassungseinheit, die als Reaktion auf die Bereitstellung einer Ressource, die recycelt werden soll, ein Sammelereignis der Ressource erfasst;
eine Bereitstellerinformationserfassungseinheit, die Bereitsteller-Identifikationsinformation zum Identifizieren eines Bereitstellers erfasst, der die Ressource bereitgestellt hat;
eine Bereitstelleraufzeichnungseinheit, die eine Zuordnung zwischen Sammelereignis-Identifikationsinformation zum Identifizieren des Sammelereignisses der Ressource und der Bereitsteller-Identifikationsinformation des Bereitstellers der Ressource in einer Bereitstellerdatenbank aufzeichnet; und
eine Rückverfolgungsverarbeitungseinheit, die einen Recyclingprozess für die Ressource unter Verwendung des Sammelereignisses der Ressource rückverfolgt, wobei die Ereigniserfassungseinheit ein Recyclingprozessereignis der Ressource als Reaktion auf den an der Ressource durchzuführenden Recyclingprozess erfasst,
die Rückverfolgungsverarbeitungseinheit in einer Rückverfolgungsinformationsdatenbank eine Zuordnung zwischen dem Recyclingprozessereignis und dem Sammelereignis der Ressource, die in dem Recyclingprozessereignis als Prozessziel festgelegt ist, aufzeichnet, wobei die Ressource eine oder mehrere Ressourcen einschließt,
die Rückverfolgungsinformationsdatenbank als Offenlegungsinformation die Zuordnung zwischen dem Recyclingprozessereignis und dem Sammelereignis der Ressource, die in dem Recyclingprozessereignis als das Prozessziel festgelegt ist, aufzeichnet, wobei die Ressource eine oder mehrere Ressourcen einschließt, und
der Bereitsteller eine Vielzahl von Bereitstellern einschließt, und die Bereitstellerdatenbank als Nichtoffenlegungsinformation die Zuordnung zwischen der Sammelereignis-Identifikationsinformation und der Bereitsteller-Identifikationsinformation in Bezug auf einen der Bereitsteller aufzeichnet.

## Revendications

1. Appareil de gestion de ressource comprenant :
une unité d'acquisition d'événements (2307) qui acquiert, en réponse à la fourniture d'une ressource devant être recyclée, un événement de collecte de la ressource ;
une unité d'acquisition d'informations sur le fournisseur (2305) qui acquiert des informations d'identification du fournisseur pour identifier un fournisseur qui a fourni la ressource ;
une unité d'enregistrement de fournisseur (920) qui enregistre une association entre des informations d'identification d'événement de collecte destinées à identifier l'événement de collecte de la ressource et les informations d'identification de fournisseur du fournisseur de la ressource dans une base de données de fournisseurs (930) ; et
une unité de traitement de traçabilité (950) qui trace un traitement de recyclage pour la ressource en utilisant l'événement de collecte de la ressource, dans lequel
l'unité d'acquisition d'événement (2307) acquiert un événement de traitement de recyclage de la ressource en réponse au traitement de recyclage devant être effectué sur la ressource,
l'unité de traitement de traçabilité (950) enregistre, dans une base de données d'informations de traçabilité, une association entre l'événement de traitement de recyclage et l'événement de collecte de la ressource qui est définie comme une cible de traitement dans l'événement de traitement de recyclage, la ressource incluant une ou plusieurs ressources,
la base de données d'informations de traçabilité (960) enregistre, en tant qu'informations divulguées, l'association entre l'événement de traitement de recyclage et l'événement de collecte de la ressource qui est définie comme la cible de traitement dans l'événement de traitement de recyclage, la ressource incluant une ou plusieurs ressources, et
le fournisseur inclut une pluralité de fournisseurs, et la base de données de fournisseurs (930) enregistre, en tant qu'informations non divulguées, l'association entre les informations d'identification d'événement de collecte et les informations d'identification de fournisseur en ce qui concerne l'un des fournisseurs.

2. Appareil de gestion de ressource selon la revendication 1, comprenant en outre une unité de fourniture d'informations (970) qui informe le fournisseur de la ressource qui est définie comme la cible de traitement que la ressource a été traitée en réponse à l'acquisition de l'événement de traitement de recyclage, dans lequel
l'unité de fourniture d'informations (970) acquiert l'événement de collecte associé à l'événement de traitement de recyclage à partir de la base de données d'informations de traçabilité (960), et acquiert les informations d'identification de fournisseur associées à l'événement de collecte qui est acquis à partir de la base de données de fournisseurs (930).

3. Appareil de gestion de ressource selon la revendication 1 ou revendication 2, dans lequel l'unité d'acquisition d'informations sur le fournisseur (2305) reçoit, à partir d'un appareil de collecte fourni dans un lieu de collecte, les informations d'identification de fournisseur reçues par l'appareil de collecte à partir d'un terminal de communication du fournisseur et des informations d'identification d'appareil de collecte pour identifier l'appareil de collecte.

4. Appareil de gestion de ressource selon la revendication 1 ou la revendication 2, dans lequel l'unité d'acquisition d'informations sur le fournisseur (2305) reçoit des informations d'identification d'appareil de collecte pour identifier un appareil de collecte fourni dans un lieu de collecte et les informations d'identification de fournisseur à partir d'un terminal de communication du fournisseur.

5. Appareil de gestion de ressource selon la revendication 1 ou la revendication 2, dans lequel l'unité d'acquisition d'informations sur le fournisseur (2305) spécifie le fournisseur qui a fourni la ressource à un lieu de collecte sur la base d'un emplacement d'un terminal de communication du fournisseur.

6. Appareil de gestion de ressource selon l'une quelconque des revendications 1 à 5,
dans lequel l'unité de traitement de traçabilité (950) enregistre, sur la base d'informations de localisation d'un véhicule de collecte qui collecte la ressource, une association entre l'événement de collecte des une ou plusieurs ressources et l'événement de traitement de recyclage indiquant un ramassage des une ou plusieurs ressources par le véhicule de collecte dans la base de données d'informations de traçabilité (960).

7. Appareil de gestion de ressource selon l'une quelconque des revendications 1 à 6,
dans lequel
l'unité d'acquisition d'événements (2307) acquiert un second événement de traitement de la ressource en réponse à un second procédé devant être effectué sur la ressource sur laquelle un premier traitement a été mis en œuvre, et
l'unité de traitement de traçabilité (950) enregistre en outre, dans la base de données d'informations de traçabilité (960), une association entre le second événement de traitement et un premier événement de traitement acquis en réponse à la mise en œuvre du premier traitement.

8. Appareil de gestion de ressource selon la revendication 7, dans lequel le premier traitement inclut une pluralité de premiers traitements, la ressource inclut une pluralité de ressources, le premier événement de traitement inclut une pluralité de premiers événements de traitement,
et après que la pluralité de ressources sont respectivement traitées par la pluralité de premiers traitements, en réponse à la pluralité de ressources devant être traitées par le second traitement, l'unité de traitement de traçabilité (950) enregistre, dans la base de données d'informations de traçabilité (960), des associations entre le second événement de traitement et la pluralité de premiers événements de traitement respectivement acquis en réponse à la pluralité de premiers traitements.

9. Appareil de gestion de ressource selon l'une quelconque des revendications 1 à 8,
dans lequel en réponse à la détection qu'un véhicule de collecte qui a collecté la ressource arrive au niveau d'une usine de traitement, l'unité de traitement de traçabilité (950) enregistre une association entre l'événement de collecte concernant la ressource collectée par le véhicule de collecte et l'événement de traitement de recyclage devant être acquis en réponse au traitement de recyclage de la ressource dans l'usine de traitement dans la base de données d'informations de traçabilité (960).

10. Appareil de gestion de ressource selon l'une quelconque des revendications 1 à 9,
comprenant en outre une unité d'attribution de prime d'incitation (980) qui attribue une prime d'incitation au fournisseur de la ressource en réponse au fait que la ressource a été recyclée.

11. Appareil de gestion de ressource selon l'une quelconque des revendications 1 à 10,
dans lequel l'unité de traitement de traçabilité (950) enregistre l'événement de collecte et l'événement de traitement de recyclage concernant la ressource en tant que chaîne de blocs dans la base de données d'informations de traçabilité (960), l'événement de traitement de recyclage incluant un ou plusieurs événements de traitement de recyclage.

12. Procédé de gestion de ressource mis en œuvre par ordinateur comprenant :
l'acquisition, par un appareil de gestion de ressource, en réponse à la fourniture d'une ressource devant être recyclée, d'un événement de collecte de la ressource ;
l'acquisition, par l'appareil de gestion de ressource, d'un événement de traitement de recyclage de la ressource en réponse à un traitement de recyclage devant être effectué sur la ressource ;
l'acquisition, par l'appareil de gestion de ressource, d'informations d'identification de fournisseur pour identifier un fournisseur qui a fourni la ressource ;
l'enregistrement, par l'appareil de gestion de ressource, d'une association entre des informations d'identification d'événement de collecte destinées à identifier l'événement de collecte de la ressource et les informations d'identification de fournisseur du fournisseur de la ressource dans une base de données de fournisseurs ; et le traçage, par l'appareil de gestion de ressource, du traitement de recyclage pour la ressource en utilisant l'événement de collecte de la ressource, dans lequel
le traçage inclut l'enregistrement, dans une base de données d'informations de traçabilité, d'une association entre l'événement de traitement de recyclage et l'événement de collecte de la ressource qui est définie comme une cible de traitement dans l'événement de traitement de recyclage, la ressource incluant une ou plusieurs ressources,
la base de données d'informations de traçabilité enregistre, en tant qu'informations divulguées, l'association entre l'événement de traitement de recyclage et l'événement de collecte de la ressource qui est définie comme la cible de traitement dans l'événement de traitement de recyclage, la ressource incluant une ou plusieurs ressources, et
le fournisseur inclut une pluralité de fournisseurs, et la base de données de fournisseurs enregistre, en tant qu'informations non divulguées, l'association entre les informations d'identification d'événement de collecte et les informations d'identification de fournisseur en ce qui concerne l'un des fournisseurs.

13. Programme de gestion de ressource qui, lorsqu'il est mis en œuvre par un ordinateur, amène l'ordinateur à fonctionner comme :
une unité d'acquisition d'événement qui acquiert, en réponse à la fourniture d'une ressource devant être recyclée, un événement de collecte de la ressource ;
une unité d'acquisition d'informations sur le fournisseur qui acquiert des informations d'identification du fournisseur pour identifier un fournisseur qui a fourni la ressource ;
une unité d'enregistrement de fournisseur qui enregistre une association entre des informations d'identification d'événement de collecte destinées à identifier l'événement de collecte de la ressource et les informations d'identification de fournisseur du fournisseur de la ressource dans une base de données de fournisseurs ; et
une unité de traitement de traçabilité qui trace un procédé de recyclage pour la ressource en utilisant l'événement de collecte de la ressource, dans lequel l'unité d'acquisition d'événements acquiert un événement de procédé de recyclage de la ressource en réponse au procédé de recyclage devant être effectué sur la ressource,
l'unité de traitement de traçabilité enregistre, dans une base de données d'informations de traçabilité, une association entre l'événement de traitement de recyclage et l'événement de collecte de la ressource qui est définie comme une cible de traitement dans l'événement de traitement de recyclage, la ressource incluant une ou plusieurs ressources, la base de données d'informations de traçabilité enregistre, en tant qu'informations divulguées, l'association entre l'événement de traitement de recyclage et l'événement de collecte de la ressource qui est définie comme la cible de traitement dans l'événement de traitement de recyclage, la ressource incluant une ou plusieurs ressources, et
le fournisseur inclut une pluralité de fournisseurs, et la base de données de fournisseurs enregistre, en tant qu'informations non divulguées, l'association entre les informations d'identification d'événement de collecte et les informations d'identification de fournisseur en ce qui concerne l'un des fournisseurs.
